(19) Europäisches Patentamt
European Patent Office
Office européen des brevets

(11) **EP 2 341 235 A1**

(12) **EUROPEAN PATENT APPLICATION**
published in accordance with Art. 153(4) EPC

(43) Date of publication:
**06.07.2011 Bulletin 2011/27**

(51) Int Cl.:
*F02D 29/02* (2006.01)        *B60W 10/06* (2006.01)
*B60W 10/08* (2006.01)        *B60W 20/00* (2006.01)
*F02D 41/04* (2006.01)

(21) Application number: **08877780.0**

(22) Date of filing: **31.10.2008**

(86) International application number:
**PCT/JP2008/069966**

(87) International publication number:
**WO 2010/050070 (06.05.2010 Gazette 2010/18)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **Toyota Jidosha Kabushiki Kaisha Toyota-shi, Aichi 471-8571 (JP)**

(72) Inventor: **ITABASHI, Kaiji**
**Toyota-shi**
**Aichi 471-8571 (JP)**

(74) Representative: **TBK**
**Bavariaring 4-6**
**80336 München (DE)**

(54) **DAMPING CONTROLLER OF VEHICLE**

(57)    A vibration-damping controlling apparatus (1) of a vehicle (10) for suppressing vibration including a component in a pitch direction or in a bounce direction occurring in the vehicle (10) by an input from a road surface to wheels (12FL, 12FR, 12RL and 12RR) of the vehicle (10) by controlling driving force of the vehicle (10) is provided with a setting means (3) that sets a vibration-damping control compensation amount by feedback control based on a wheel speed of the wheels (12FL, 12FR, 12RL and 12RR) of the vehicle (10) and a driving force controlling means (2) that controls driving force of a power source for travel (22) of the vehicle (10) so as to suppress amplitude of the vibration based on the vibration-damping control compensation amount and changes the vibration-damping control compensation amount based on a state of the vehicle (10), so that the vibration-damping controlling apparatus (1) of the vehicle (10) can execute appropriate vibration-damping control corresponding to the state of the vehicle (10).

FIG.1

EP 2 341 235 A1

**Description**

TECHNICAL FIELD

The present invention relates to a vibration-damping controlling apparatus of a vehicle, and especially relates to the vibration-damping controlling apparatus of the vehicle for suppressing vibration of a vehicle body by controlling driving force of the vehicle.

BACKGROUND ART

The vibration-damping controlling apparatus for executing so-called sprung vibration-damping control for suppressing sprung vibration of the vehicle is conventionally known as the vibration-damping controlling apparatus of the vehicle for suppressing the vibration of the vehicle. Herein, the sprung vibration of the vehicle is intended to mean the vibration occurring in the vehicle body through a suspension by an input from a road surface to a wheel of the vehicle, for example, the vibration having a frequency component of 1 to 4 Hz, more specifically, approximately 1.5 Hz, and the sprung vibration of the vehicle includes a component in a pitch direction or in a bounce direction (vertical direction) of the vehicle. The sprung vibration is herein intended to mean suppression of the above-described sprung vibration of the vehicle.
Such sprung vibration while the vehicle is traveling, that is to say, the vibration such as pitch and bounce occurs by braking and driving force (or inertial force) acting on the vehicle body at the time of acceleration and deceleration of the vehicle and another external force acting on the vehicle body, and the force is reflected on "wheel torque" (torque acting between the wheel and a road surface which the wheel touches) acting from the wheel (driving wheel at the time of driving) on the road surface. Then, in technology related to the vibration-damping control of the vehicle, it is suggested to suppress the vibration of the vehicle body while the vehicle is traveling by adjusting the wheel torque through drive output control of a drive device of the vehicle. That is to say, in the vibration-damping control of the vibration by such drive output control, the pitch/bounce vibration occurring in the vehicle body when there is acceleration/deceleration request of the vehicle or when the external force (disturbance) acts on the vehicle body and the wheel torque varies is predicted by using a motion model built by supposing a so-called mechanical model of the sprung vibration of the vehicle body, for example, and a drive output of the drive device of the vehicle is adjusted such that the predicted vibration is suppressed.
The vibration-damping control by the drive output control as described above inhibits generation of vibration energy by adjusting a source of power to generate the vibration rather than inhibiting the generated vibration energy by absorbing the same as in the vibration-damping control by the suspension, so that there is advantage that a vibration-damping action is relatively rapid and energy efficiency is excellent. Also, in the vibration-damping control by the drive output control, a control target is centralized at the drive output (driving torque) of the drive device, so that the control may be relatively easily adjusted.
As such vibration-damping controlling apparatus of the vehicle, for example, the vibration-damping controlling apparatus of the vehicle disclosed in the Patent Document 1 is provided with a wheel torque estimated value obtaining unit for obtaining a wheel torque estimated value acting on the wheel generated at a site at which the wheel of the vehicle touches the road surface, a driving force controlling unit for controlling the driving force of the vehicle so as to suppress pitch or bounce vibration amplitude based on the wheel torque estimated value, and a slipping state amount obtaining unit for obtaining a wheel slipping state amount indicating a slipping state of the wheel. The vibration-damping controlling apparatus of the vehicle appropriately suppresses the pitch or bounce vibration of the vehicle by controlling the driving force of the vehicle by correcting an absolute value of the wheel torque estimated value or a control amount of the driving force so as to be smaller as magnitude of slip indicated by the wheel slipping state amount is larger.
[Patent Document 1] Japanese Patent Application Laid-open No. 2008-100605

DISCLOSURE OF INVENTION

PROBLEMS TO BE SOLVED BY THE INVENTION

In the above-described vibration-damping controlling apparatus of the vehicle disclosed in the Patent Document 1, it is desired to further improve the vibration-damping control according to the state of the vehicle, for example.
Therefore, an object of the present invention is to provide the vibration-damping controlling apparatus of the vehicle capable of executing appropriate vibration-damping control according to the state of the vehicle.

MEANS FOR SOLVING PROBLEM

In order to achieve the object, a vibration-damping controlling apparatus of a vehicle, according to claim 1, for suppressing vibration including a component in a pitch direction or in a bounce direction occurring in the vehicle by an input from a road surface to a wheel of the vehicle by controlling driving force of the vehicle, includes a setting means that sets a vibration-damping control compensation amount by feedback control based on a wheel speed of the wheel of the vehicle; and a driving force controlling means that controls driving force of a power source for travel of the vehicle so as to suppress amplitude of the vibration based on the vibration-damping control compensation amount, wherein the vibration-damping controlling apparatus changes the vibration-damping control compensation amount based on a state of the vehicle.

In the vibration-damping controlling apparatus of the vehicle according to claim 2, the vibration-damping controlling apparatus changes the vibration-damping control compensation amount based on a vehicle speed of the vehicle.

In the vibration-damping controlling apparatus of the vehicle according to claim 3, the vibration-damping controlling apparatus changes the vibration-damping control compensation amount based on a gear position of a transmission loaded on the vehicle.

In the vibration-damping controlling apparatus of the vehicle according to claim 4, the vibration-damping controlling apparatus changes the vibration-damping control compensation amount based on an output rotational speed of the power source for travel.

In the vibration-damping controlling apparatus of the vehicle according to claim 5, the vibration-damping controlling apparatus changes the vibration-damping control compensation amount based on requested driving force to the vehicle.

In the vibration-damping controlling apparatus of the vehicle according to claim 6, the vibration-damping controlling apparatus changes the vibration-damping control compensation amount based on a driving state of a transmission loaded on the vehicle.

In the vibration-damping controlling apparatus of the vehicle according to claim 7, the vibration-damping controlling apparatus changes the vibration-damping control compensation amount based on an allowable driving force variable value of the power source for travel.

In the vibration-damping controlling apparatus of the vehicle according to claim 8, the power source for travel is a diesel engine, and the vibration-damping controlling apparatus changes the vibration-damping control compensation amount based on an allowable fuel injection amount of the power source for travel.

In the vibration-damping controlling apparatus of the vehicle according to claim 9, the vibration-damping controlling apparatus changes the vibration-damping control compensation amount by setting a control gain according to a state of the vehicle for the vibration-damping control compensation amount and multiplying the control gain by the vibration-damping control compensation amount.

In the vibration-damping controlling apparatus of the vehicle according to claim 10, includes a limiting means that limits the vibration-damping control compensation amount according to a state of the power source for travel of the vehicle.

In the vibration-damping controlling apparatus of the vehicle according to claim 11, the vibration-damping controlling apparatus limits the vibration-damping control compensation amount based on an allowable driving force variable value of the power source for travel.

In the vibration-damping controlling apparatus of the vehicle according to claim 12, the vibration-damping controlling apparatus limits the vibration-damping control compensation amount when the power source for travel is cold.

In the vibration-damping controlling apparatus of the vehicle according to claim 13, the vibration-damping controlling apparatus limits the vibration-damping control compensation amount based on a deviation between a set idle rotational speed and an actual output rotational speed of the power source for travel in an idle operation state of the vehicle.

In the vibration-damping controlling apparatus of the vehicle according to claim 14, the power source for travel is a diesel engine, and the vibration-damping controlling apparatus limits the vibration-damping control compensation amount based on an allowable fuel injection amount of the power source for travel.

In the vibration-damping controlling apparatus of the vehicle according to claim 15, the power source for travel is a diesel engine, and the vibration-damping controlling apparatus limits the vibration-damping control compensation amount based on a deviation between a set idle fuel injection amount and an actual fuel injection amount of the power source for travel in an idle operation state of the vehicle.

In order to achieve the object, a vibration-damping controlling apparatus of a vehicle, according to claim 16, for suppressing vibration occurring in the vehicle by an input from a road surface to a wheel of the vehicle by controlling driving force of the vehicle, includes a setting means that sets a vibration-damping control compensation amount for suppressing the vibration based on an actual measured value related to the vibration; and a driving force controlling means that controls driving force of a power source for travel of the vehicle according to the vibration-damping control compensation amount, wherein the vibration-damping controlling apparatus changes the vibration-damping control compensation amount based on a state of the vehicle.

## EFFECT OF THE INVENTION

According to the vibration-damping controlling apparatus of the vehicle according to the present invention, it is possible to execute the appropriate vibration-damping control according to the state of the vehicle.

## BRIEF DESCRIPTION OF THE DRAWINGS

[FIG. 1] FIG. 1 is a view illustrating a schematic configuration example of a vehicle to which a vibration-damping controlling apparatus according to an embodiment of the present invention is applied.

[FIG. 2] FIG. 2 is a schematic diagram of an inner configuration of an electronic control unit to which the vibration-damping controlling apparatus according to the embodiment of the present invention is applied.

[FIG. 3] FIG. 3 is a view explaining a state variable of vehicle body vibration suppressed by the vibration-damping controlling apparatus according to the embodiment of the present invention.

[FIG. 4] FIG. 4 is a schematic diagram illustrating a functional configuration example of the vibration-damping controlling apparatus according to the embodiment of the present invention in a form of a control block.

[FIG. 5] FIG. 5 is a view explaining an example of a mechanical motion model of vehicle body vibration supposed in the vibration-damping controlling apparatus according to the embodiment of the present invention.

[FIG. 6] FIG. 6 is a view explaining an example of the mechanical motion model of the vehicle body vibration supposed in the vibration-damping controlling apparatus according to the embodiment of the present invention.

[FIG. 7] FIG. 7 is a schematic diagram of a functional configuration example of a FF control gain setting unit and a FB control gain setting unit included in the vibration-damping controlling apparatus according to the embodiment of the present invention in a form of a control block.

## EXPLANATION OF LETTERS OR NUMERALS

| | |
|---|---|
| 1 | Vibration-damping controlling apparatus (vibration-damping controlling apparatus for vehicle) |
| 2 | Drive controlling unit (driving force controlling means) |
| 2a | Driver requested torque calculating unit |
| 2b | Control command determining unit |
| 2c | Adder |
| 3 | Vibration-damping controlling unit (setting means) |
| 3a | Feedforward control system |
| 3b | Feedback control system |
| 3c | Wheel torque converting unit |
| 3d | Motion model unit |
| 3e | FF secondary regulator unit |
| 3f | Wheel torque estimating unit |
| 3g | FB secondary regulator unit |
| 3h | Adder |
| 3i | Driving torque converting unit |
| 3j | Vibration-damping control command determining unit (limiting means) |
| 3k | FF control changing unit |
| 3l | FF control gain setting unit |
| 3m | FB control changing unit |
| 3n | FB control gain setting unit |
| 3o | FF control base gain setting unit |
| 3p | FF control vehicle speed gear position correcting unit |
| 3q | N-T correcting unit |
| 3r | FB control base gain setting unit |
| 3s | FB control vehicle speed gear position correcting unit |

| 3t | Driving force zero cross correcting unit |
|---|---|
| 3u | Torque guard correcting unit |
| 3v | Injection amount guard correcting unit |
| 3w | FF control gain calculating unit |
| 3x | FB control gain calculating unit |
| 10 | Vehicle |
| 12FL, 12FR, 12RL, 12RR | Wheel |
| 14 | Accelerator pedal |
| 15 | Navigation device |
| 20 | Drive device |
| 22 | Power source for travel |
| 24 | Torque converter |
| 26 | Transmission |
| 28 | Differential gear device |
| 30FL, 30FR, 30RL, 30RR | Wheel speed sensor |
| 50 | Electronic control unit |
| 50a | Drive control device |
| 50b | Brake control device |
| K·FF | FF control gain |
| K·FB | FB control gain |
| U·FF | FF system vibration-damping torque compensation amount (FF control amount) |
| U·FB | FB system vibration-damping torque compensation amount (FB control amount) |

BEST MODE(S) FOR CARRYING OUT THE INVENTION

Hereinafter, an embodiment of a vibration-damping controlling apparatus of a vehicle according to the present invention is described in detail with reference to the drawings. Meanwhile, the present invention is not limited by the embodiment. Also, components in the following embodiment include a component, which can be easily replaced by one skilled in the art, or a substantially identical component.

(Embodiment)

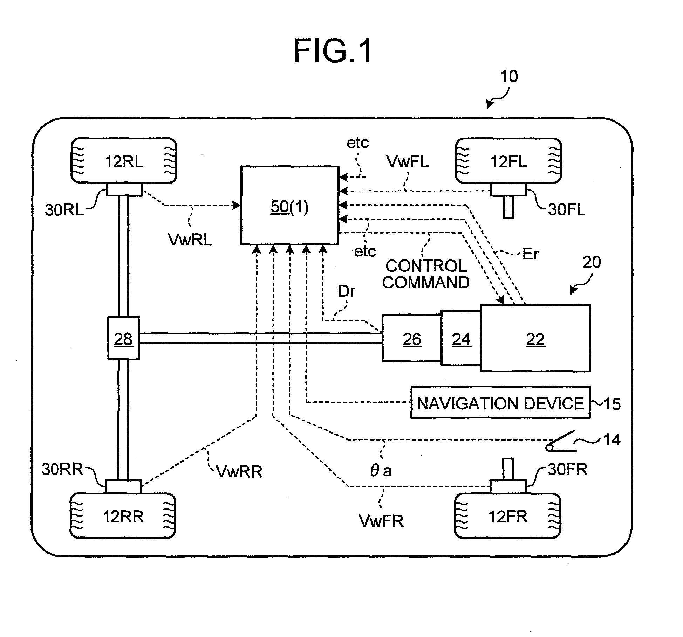

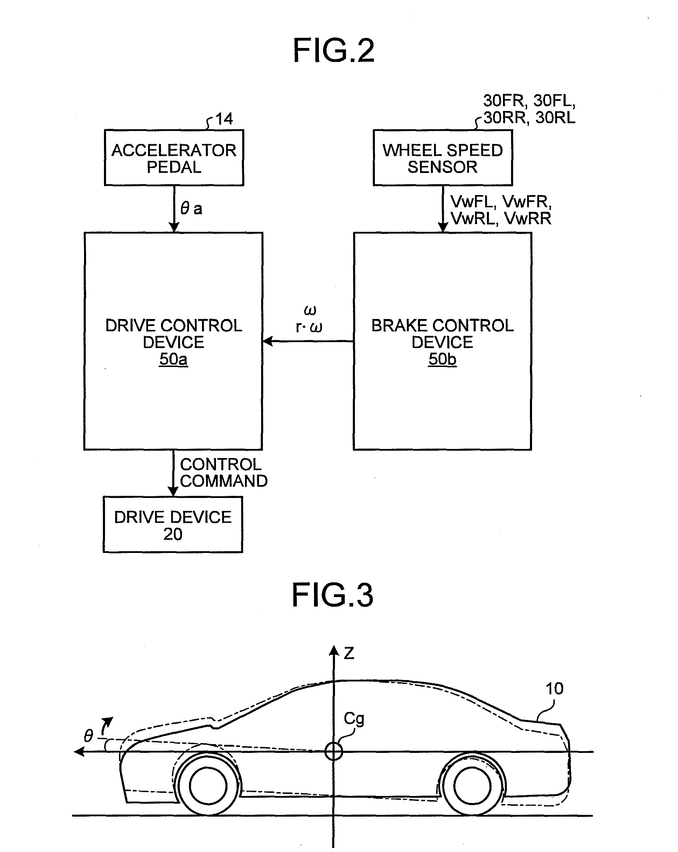

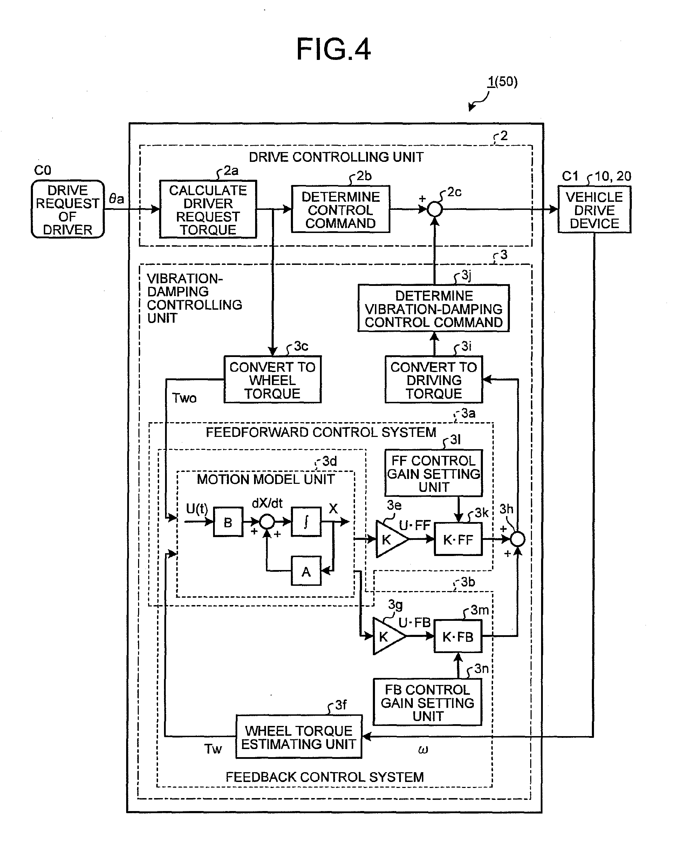

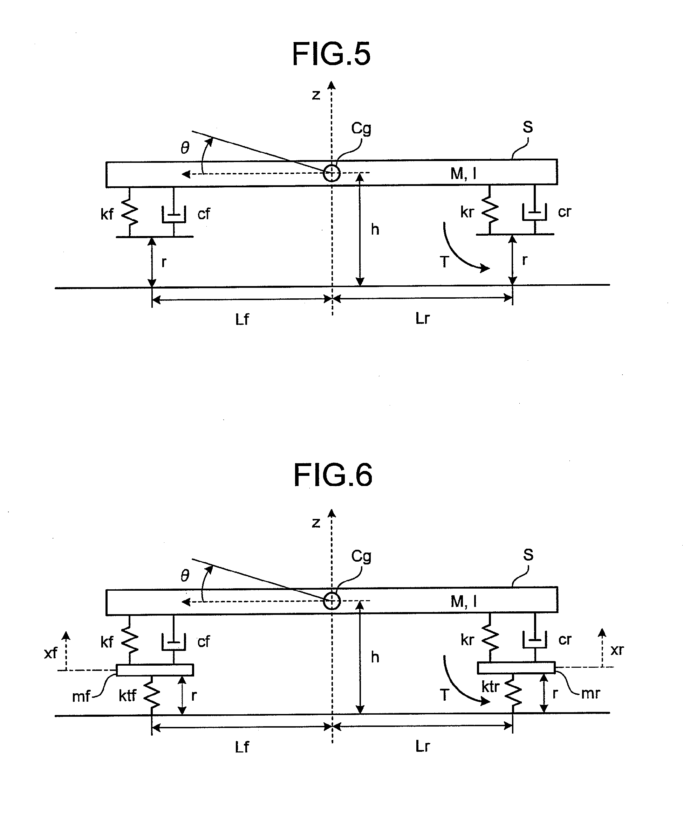

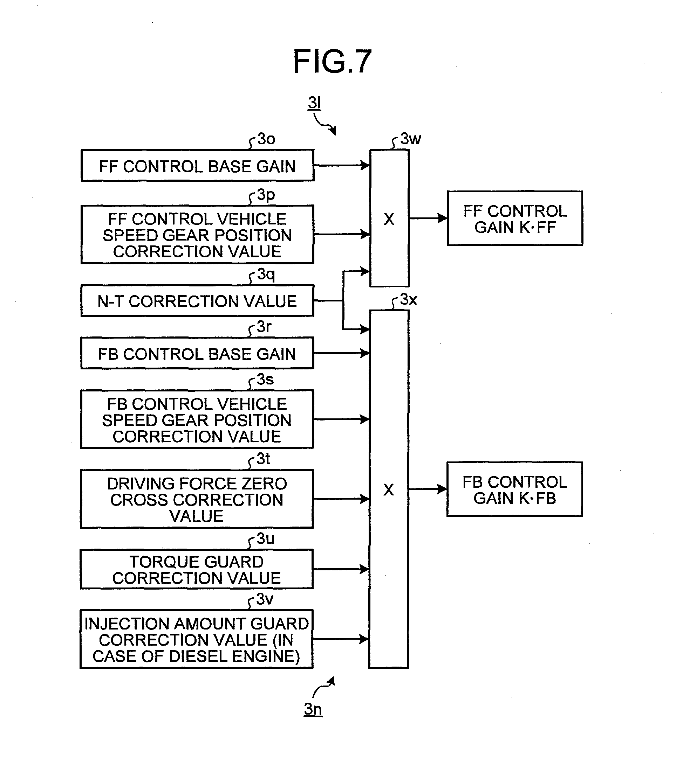

FIG. 1 is a view illustrating a schematic configuration example of the vehicle to which the vibration-damping controlling apparatus according to the embodiment of the present invention is applied, FIG. 2 is a schematic diagram of an inner configuration of an electronic control unit to which the vibration-damping controlling apparatus according to the embodiment of the present invention is applied, FIG. 3 is a view explaining a state variable of vehicle body vibration suppressed by the vibration-damping controlling apparatus according to the embodiment of the present invention, FIG. 4 is a schematic diagram illustrating a functional configuration example of the vibration-damping controlling apparatus according to the embodiment of the present invention in a form of a control block, FIGS. 5 and 6 are views explaining an example of a mechanical motion model of the vehicle body vibration supposed in the vibration-damping controlling apparatus according to the embodiment of the present invention, and FIG. 7 is a schematic diagram illustrating a functional configuration example of a FF control gain setting unit and a FB control gain setting unit provided on the vibration-damping controlling apparatus according to the embodiment of the present invention in a form of a control block.

A vibration-damping controlling apparatus 1 of the vehicle according to this embodiment is applied to a vehicle 10 loaded with a power source for travel 22 as illustrated in FIG. 1. Meanwhile, although it is described such that the vehicle 10 to which the vibration-damping controlling apparatus 1 according to this embodiment is applied uses an engine such as a gasoline engine, a diesel engine and an LPG engine as the power source for travel 22, it is also possible to use an electric motor such as a motor or use the engine together with the electric motor such as the motor, that is to say, the vibration-damping controlling apparatus 1 of the vehicle according to the present invention may be applied to a so-called hybrid vehicle. Although the vehicle 10 is a so-called FR drive type in which the power source for travel 22 is loaded on a front side in a direction of forward movement of the vehicle 10 and right and left rear wheels 12RR and 12RL are provided as driving wheels, a drive type of the vehicle 10 may be a FF drive type and a four-wheel-drive type in addition to the FR drive type.

Although it is described that the vibration-damping controlling apparatus 1 of the vehicle according to this embodiment is incorporated in an electronic control unit (ECU) 50 to be described later as illustrated in FIG. 1, that is to say, the vibration-damping controlling apparatus 1 is doubled as the electronic control unit 50, this is not limited to the description. The vibration-damping controlling apparatus 1 may be composed separate from the electronic control unit 50 to be connected to the electronic control unit 50.

The vibration-damping controlling apparatus 1 of the vehicle 10 of this embodiment executes so-called sprung vibration-damping control to suppress sprung vibration of the vehicle 10. Herein, the sprung vibration of the vehicle 10 is the vibration occurring in a vehicle body of the vehicle 10 through a suspension by an input from a road surface to wheels 12FR and 12FL, which are right and left front wheels of the vehicle 10, and the wheels 12RR and 12RL, which are the right and left rear wheels of the vehicle 10, according to unevenness of the road surface, for example, the vibration having a frequency component of 1 to 4 Hz, more specifically, approximately 1.5 Hz, and the sprung vibration of the vehicle 10 includes a component in a pitch direction or in a bounce direction (vertical direction) of the vehicle 10 or both of them. The sprung vibration-damping is herein intended to mean suppression of the above-described sprung vibration of the vehicle 10. When the vibration in the pitch direction or in the bounce direction (vertical direction) of the vehicle 10 having the frequency component of 1 to 4 Hz, more specifically, approximately 1.5 Hz occurs, for example, by the input from the road surface to the wheels 12FR and 12FL, which are the right and left front wheels of the vehicle 10, and the wheels 12RR and 12RL, which are the right and left rear wheels of the vehicle 10, the vibration-damping controlling apparatus 1 adjusts "wheel torque" (torque acting between the wheel and the road surface on which the wheel touches) acting from the wheel (driving wheel at the time of driving) on the road surface by controlling the power source for travel 22 to output driving torque (driving force) having an opposite phase, for example, thereby suppressing the above-described vibration. According to this, the vibration-damping controlling apparatus 1 of the vehicle 10 improves steering stability of a driver, driving quality of a passenger and the like.

The vehicle 10 to which the vibration-damping controlling apparatus 1 is applied has the wheels 12FR and 12FL, which are the right and left front wheels, and the wheels 12RR and 12RL, which are the right and left rear wheels. The vehicle 10 is loaded with a drive device 20 for generating the driving force in the wheels 12RL and 12RR according to depression of an accelerator pedal 14 by the driver in various known mode. The drive device 20 is configured such that the driving torque or rotational driving force is transmitted from the power source for travel 22 to the wheels 12RL and 12RR through a torque converter 24, a transmission 26, a differential gear device 28 and the like in an illustrated example. Meanwhile, although not herein illustrated, the vehicle 10 is provided with a brake device for generating braking force in each wheel and a steering device for controlling a rudder angle of the front wheels or the front and rear wheels as various known vehicles.

Operation of the drive device 20 is controlled by the electronic control unit 50 doubled as the vibration-damping controlling apparatus 1. The electronic control unit 50 may include a microcomputer having a CPU, a ROM, a RAM and an input/output port device connected to one another by a bidirectional common bus and a driving circuit in various known forms. A signal indicating a wheel speed Vwi (i=FL, FR, RL and RR) from a wheel speed sensor 30i (i=FL, FR, RL and RR) loaded on the wheels 12FL, 12FR, 12RL and 12RR and a signal from a sensor provided on each part of the vehicle 10 such as an engine rotational speed (an output rotational speed of the power source for travel 22 and a rotational speed of an output shaft of the motor when the power source for travel 22 is the motor) Er, an output rotational speed Dr of the transmission 26, an accelerator pedal depression amount $\theta a$, a cooling water temperature of the power source for travel 22, an inhaled air temperature, an inhaled air pressure, an atmospheric pressure, a throttle opening degree, a fuel injection amount, fuel injection timing (further, ignition timing when the power source for travel 22 is the gasoline engine, and further, a current amount when the power source for travel 22 is the motor), a shift position of a shift position device not illustrated provided on the vehicle 10 and a gear position of the transmission 26 when the transmission 26 has a plurality of gear positions are input to the electronic control unit 50. Meanwhile, in addition to the above description, various detection signals for obtaining various parameters necessary for various pieces of control, which should be executed in the vehicle 10 of this embodiment, are input to the electronic control unit 50.

The electronic control unit 50 includes a drive control device 50a for controlling the operation of the drive device 20 and a brake control device 50b for controlling operation of the brake device (not illustrated), for example, as illustrated in FIG. 2.

In the brake control device 50b, an electric signal in a pulse form sequentially generated for each rotation of the wheel by a predetermined amount from wheel speed sensors 30FR, 30FL, 30RR and 30RL of the wheels 12FL, 12FR, 12RL and 12RR is input thereto, a rotational speed of the wheel is calculated by measuring a time interval of arrival of the successively input pulse signal, and a wheel speed value is calculated by multiplying the same by a wheel radius. The brake control device 50b transmits the wheel speed value to the drive control device 50a (calculation from the wheel rotational speed to the wheel speed may be performed by the drive control device 50a. In this case, the wheel rotational speed is given from the brake control device 50b to the drive control device 50a).

The brake control device 50b may also perform brake control such as various known ABS control, VSC and TRC, that is to say, this may inhibit frictional force (vector sum of back and forth force and lateral force of the wheels 12FL, 12FR, 12RL and 12RR) between the wheels 12FL, 12FR, 12RL and 12RR and the road surface from becoming too large to excess a limit, or may control the back and forth force or a slip ratio of the wheel in order to prevent deterioration of behavior of the vehicle 10 due to such frictional force of the wheels 12FL, 12FR, 12RL and 12RR, which excesses the limit, or this may be a VDIM to stabilize the behavior of the vehicle including steering control and the like in addition to the slip ratio control of the wheels 12FL, 12FR, 12RL and 12RR of the ABS control, the VSC and the TRC. Meanwhile, in a case in which the VDIM is loaded, the brake control device composes 50b, a part of the VDIM.

The drive control device 50a determines driver requested torque (requested driving force) of the drive device 20 requested by the driver based on the accelerator pedal depression amount θa as a value corresponding to the drive request from the driver to the vehicle 10, and gives a control command, which is a basis of the control, to the drive device 20 based on the driver requested torque. Herein, the control command is a target throttle opening degree and target ignition timing when the power source for travel 22 is the gasoline engine, a target fuel injection amount when the power source for travel 22 is the diesel engine, and a target current amount when the power source for travel 22 is the motor.

Then, in the drive control device 50a of the present invention, in order to execute the sprung vibration-damping control of the vehicle body of the vehicle 10 by driving torque (driving force) control, the driver requested torque is corrected based on vibration-damping control compensation torque (vibration-damping control compensation amount) to be described later, or the control command corresponding to the driver requested torque is corrected based on a vibration-damping control command corresponding to the vibration-damping control compensation torque, and the control command corresponding to the corrected requested torque is given to the drive device 20. In the sprung vibration-damping control by the vibration-damping controlling apparatus 1 of this embodiment, (1) the wheel torque of the wheel by force acting in the wheel between the same and the road surface is obtained, (2) a pitch/bounce vibration state amount is obtained, and (3) a correction amount (vibration-damping control compensation amount) of the wheel torque to suppress the pitch/bounce vibration state amount is calculated and the requested torque or the control command is corrected based on this. In this embodiment, although a wheel torque estimated value is calculated based on the wheel speed value of the wheel (or the wheel rotational speed of the wheel) as an actual measured value related to the vibration received from the brake control device 50b as the wheel torque in (1), this is not a limitation. The wheel torque may be obtained by calculating the wheel torque estimated value based on the engine rotational speed as the actual measured value related to the vibration or may be a value of the wheel torque actually occurring in the wheel detected by a sensor capable of directly detecting the value of the wheel torque while the vehicle 10 travels as the actual measured value related to the vibration such as a wheel torque sensor and a wheel six-component force meter. Although it is described that the pitch/bounce vibration state amount in (2) is calculated by a motion model of the vehicle body vibration of the vehicle 10, this is not a limitation. As the pitch/bounce vibration state amount, a value detected by various sensors such as a pitch/bound sensor, a G sensor and a sensor for detecting a compression amount of the suspension may be used as the actual measured value related to the vibration. That is to say, although it is described that the vibration-damping control compensation amount is set by feedback control based on the wheel speed of the wheel of the vehicle 10 as the actual measured value at least related to the vibration as described later in this embodiment, this is not a limitation, and it is also possible to directly detect the actual measured value related to the vibration by the sensor and set the vibration-damping control compensation amount for suppressing the vibration based on the actual measured value related to the vibration. Meanwhile, the vibration-damping controlling apparatus 1 of the vehicle 10 of this embodiment is realized by processing operation from (1) to (3).

In the vehicle 10, when the drive device 20 operates based on the drive request of the driver and variation in the wheel torque occurs, in the vehicle body of the vehicle 10 illustrated in FIG. 3, bounce vibration (vibration in the bounce direction) in a vertical direction (z direction) of a center of gravity of the vehicle body Cg and pitch vibration (vibration in the pitch direction) in the pitch direction (θ direction) around the center of gravity of the vehicle body might occur. Also, when external force or torque (disturbance) acts by the input from the road surface to the wheels 12FL, 12FR, 12RL and 12RR of the vehicle 10 according to the unevenness of the road surface while the vehicle 10 travels, the disturbance is transmitted to the vehicle 10 and the pitch/bounce vibration also might occur in the vehicle body. Therefore, the vibration-damping controlling apparatus 1 of the vehicle 10 of this embodiment builds the motion model of the pitch/bounce vibration of the vehicle body of the vehicle 10 and calculates displacements z and θ of the vehicle body and change ratios dz/dt and dθ/dt thereof when inputting (a value obtained by converting) the driver requested torque (to the wheel torque) and (an estimated value of) current wheel torque in the model, that is to say, the state variables of the vehicle body vibration, and the driving torque of the drive device 20 is adjusted such that the state variables obtained from the model converge to 0, that is to say, the pitch/bounce vibration is suppressed (that is to say, the control command corresponding to the driver requested torque is corrected).

FIG. 4 is a view schematically illustrating the configuration of the vibration-damping controlling apparatus 1 according to the embodiment of the present invention in a form of a control block (meanwhile, operation of each control block (except for C0 and C1) is executed by any of the drive control device 50a and the brake control device 50b of the electronic control unit 50). The vibration-damping controlling apparatus 1 of the embodiment of the present invention basically includes a drive controlling unit 2 as a driving force controlling means for giving the drive request of the driver to the vehicle 10 and a vibration-damping controlling unit 3 as a setting means for setting the vibration-damping control compensation torque (vibration-damping control compensation amount) for suppressing the pitch/bounce vibration of the vehicle body of the vehicle 10. Then, in the vibration-damping controlling apparatus 1, the drive controlling unit 2 gives (the control command corresponding to) the driver requested torque corrected based on (the vibration-damping control command corresponding to) the vibration-damping control compensation torque to the power source for travel 22 of the vehicle 10, thereby controlling the driving torque (driving force) of the power source for travel 22 of the vehicle 10 so as to suppress amplitude of the pitch/bounce vibration.

In the drive controlling unit 2, the drive request of the driver, that is to say, the depression amount of the accelerator pedal (C0) is converted to the driver requested torque by a driver requested torque calculating unit 2a in various known modes, and thereafter the driver requested torque is converted to the control command to the drive device 20 by a control command determining unit 2b and transmitted to the drive device 20 (C1). Herein, the control command is the target throttle opening degree and the target ignition timing when the power source for travel 22 is the gasoline engine, the target fuel injection amount when the power source for travel 22 is the diesel engine and the target current amount when the power source for travel 22 is the motor, as described above.

On the other hand, the vibration-damping controlling unit 3 sets the vibration-damping control compensation amount by the feedback control based on at least the wheel speed of the wheel of the vehicle 10. Herein, the vibration-damping controlling unit 3 sets the vibration-damping control compensation amount by using feedforward control based on the driver requested torque (requested driving force) to the vehicle 10 together with the feedback control based on the wheel speed of the wheel of the vehicle 10. The vibration-damping controlling unit 3 includes a feedforward control system 3a, a feedback control system 3b, a wheel torque converting unit 3c, an adder 3h, a driving torque converting unit 3i and a vibration-damping control command determining unit 3j.

The feedforward control system 3a has a so-called an optimal regulator configuration and herein includes a motion model unit 3d and a FF secondary regulator unit 3e. In the feedforward control system 3a, a value obtained by converting the driver requested torque to the wheel torque by the wheel torque converting unit 3c (driver requested wheel torque Tw0) is input to the motion model unit 3d of the pitch/bounce vibration of the vehicle body of the vehicle 10. In the motion model unit 3d, a response of the state variable of the vehicle 10 to the input torque is calculated, and a FF system vibration-damping torque compensation amount U·FF is calculated by the FF secondary regulator unit 3e as a correction amount of the driver requested wheel torque to converge the state variable to a minimum value based on a predetermined gain K to be describer later. The FF system vibration-damping torque compensation amount U·FF is a FF control amount of the driving toque (driving force) in the feedforward control system 3a based on the driver requested torque (requested driving force) to the vehicle 10, that is to say, the vibration-damping control compensation amount in the feedforward control.

The feedback control system 3b has the so-called optimal regulator configuration, and herein includes a wheel torque estimating unit 3f, the motion model unit 3d also used by the feedforward control system 3a and a FB secondary regulator unit 3g. In the feedback control system 3b, a wheel torque estimated value Tw is calculated by the wheel torque estimating unit 3f based on a wheel speed ω as described later and the wheel torque estimated value is input to the motion model unit 3d as the disturbance input. Meanwhile, since the motion model unit of the feedforward control system 3a and the motion model unit of the feedback control system 3b are herein the same, the motion model unit 3d is used by the both, however, they may be separately provided. In the motion model unit 3d, the response of the state variable of the vehicle 10 to the input torque is calculated, and a FB system vibration-damping torque compensation amount U·FB is calculated by the FB secondary regulator unit 3g as the correction amount of the driver requested wheel torque to converge the state variable to the minimum value based on the predetermined gain K to be described later. The FB system vibration-damping torque compensation amount U·FB is a FB control amount of the driving torque (driving force) in the feedback control system 3b corresponding to variation of the wheel speed based on the external force or the torque (disturbance) by the input from the road surface to the wheels 12FL, 12FR, 12RL and 12RR of the vehicle 10, that is to say, the vibration-damping control compensation amount in the feedback control.

In the vibration-damping controlling unit 3, the FF system vibration-damping torque compensation amount U·FF, which is the FF control amount of the feedforward control system 3a, (that is to say, the vibration-damping control compensation amount in the feedforward control) and the FB system vibration-damping torque compensation amount U·FB, which is the FB control amount of the feedback control system 3b, (that is to say, the vibration-damping control compensation amount in the feedback control) are transmitted to the adder 3h, the FF system vibration-damping torque compensation amount U·FF and the FB system vibration-damping torque compensation amount U·FB are added to each other by the adder 3h to calculate the vibration-damping control compensation wheel torque, and a value obtained by converting the vibration-damping control compensation wheel torque to the unit of the requested torque of the drive device 20 by the driving torque converting unit 3i, that is to say, final vibration-damping control compensation torque (total vibration-damping control compensation amount) is input to the vibration-damping control command determining unit 3j. In the vibration-damping control command determining unit 3j, the vibration-damping control compensation torque is converted to the vibration-damping control command to the drive device 20 and transmitted to an adder 2c to which the control command from the control command determining unit 2b is input. As a result, the control command corresponding to the driver requested torque is corrected such that the pitch/bounce vibration does not occur based on the vibration-damping control command corresponding to the vibration-damping control compensation torque, and the control command corresponding to the corrected requested torque is given to the drive device 20. Herein, the vibration-damping control command is a vibration-damping control compensation throttle opening degree and vibration-damping control compensation ignition timing when the power source for travel 22 is the gasoline engine, a vibration-damping control compensation fuel injection amount when the power source for travel 22 is the diesel engine, and a vibration-damping control compensation current amount when the power source for travel 22 is the motor.

Herein, in the vibration-damping control in the vibration-damping controlling apparatus 1 of this embodiment, as described above, the mechanical motion model in the pitch direction and in the bounce direction of the vehicle body of the vehicle 10 is supposed and state equations of the state variables in the pitch direction and in the bounce direction to which the driver requested wheel torque Tw0 and the wheel torque estimated value Tw (disturbance) are input are composed. Then, the input (torque value) to converge the state variables in the pitch direction and in the bounce direction to 0 is determined from such state equations by using an optimal regulator theory, and (the control command corresponding to) the driver requested torque is corrected based on the obtained torque value.

As the mechanical motion model in the bounce direction and in the pitch direction of the vehicle body of the vehicle 10, for example, as illustrated in FIG. 5, the vehicle body is regarded as a rigid body S with a mass M and inertia moment I and it is supposed that the rigid body S is supported by a front wheel suspension with an elastic coefficient kf and a damping coefficient cf and a rear wheel suspension with an elastic coefficient kr and a damping coefficient cr (the sprung vibration model of vehicle body of the vehicle 10). In this case, a motion equation in the bounce direction and a motion equation in the pitch direction of the center of gravity of the vehicle body may be represented as equations in following equation 1.

[Equation 1]

$$M\frac{d^2z}{dt^2} = -kf(z + Lf \cdot \theta) - cf\left(\frac{dz}{dt} + Lf \cdot \frac{d\theta}{dt}\right) - kr(z - Lr \cdot \theta) - cr\left(\frac{dz}{dt} - Lr \cdot \frac{d\theta}{dt}\right)$$

$$\ldots \text{ (1a)}$$

$$I\left(\frac{d^2\theta}{dt^2}\right) = -Lf\left\{kf(z + Lf \cdot \theta) + cf\left(\frac{dz}{dt} + Lf \cdot \frac{d\theta}{dt}\right)\right\} + Lr\left\{kr(z - Lr \cdot \theta) + cr\left(\frac{dz}{dt} - Lr \cdot \frac{d\theta}{dt}\right)\right\} + \frac{h}{r} \cdot T$$

$$\ldots \text{ (1b)}$$

In the above-described equation 1, Lf and Lr represent distances from the center of gravity to a front wheel shaft and to a rear wheel shaft, respectively, r represents the wheel radius, and h represents height of the center of gravity from the road surface. Meanwhile, in an equation (1a), first and second terms are components of force from the front wheel shaft and third and fourth terms are components of force from the rear wheel shaft, and in an equation (1b), a first term is a moment component of the force from the front wheel shaft and a second term is a moment component of the force from the rear wheel shaft. A third term in the equation (1b) is a moment component of force, which wheel torque T(=Tw0+Tw) occurring in the driving wheel gives around the center of gravity of the vehicle body.

The above-described equations (1a) and (1b) can be rewritten to a form of a state equation (of a linear system) as represented in a following equation (2a) by setting the displacements z and θ of the vehicle body of the vehicle 10 and the change ratios dz/dt and dθ/dt thereof to a state variable vector X(t).

$$dX(t)/dt = A \cdot X(t) + B \cdot u(t) \ldots \text{ (2a)}$$

In the above-described equation (2a), X(t), A and B are represented as

[Equation 2]

$$X(t) = \begin{pmatrix} z \\ dz/dt \\ \theta \\ d\theta/dt \end{pmatrix}, \quad A = \begin{pmatrix} 0 & 1 & 0 & 0 \\ a1 & a2 & a3 & a4 \\ 0 & 0 & 0 & 1 \\ b1 & b2 & b3 & b4 \end{pmatrix}, \quad B = \begin{pmatrix} 0 \\ 0 \\ 0 \\ p1 \end{pmatrix}$$

and, components a1 to a4 and b1 to b4 of a matrix A are given by combining coefficients of $z$, $\theta$, $dz/dt$ and $d\theta/dt$ with the above-described equations (1a) and (1b), and

$$a1 = -(kf + kr)/M,$$

$$a2 = -(cf + cr)/M,$$

$$a3 = -(kf \cdot Lf - kr \cdot Lr)/M,$$

$$a4 = -(cf \cdot Lf - cr \cdot Lr)/M,$$

$$b1 = -(Lf \cdot kf - Lr \cdot kr)/I,$$

$$b2 = -(Lf \cdot cf - Lr \cdot cr)/I,$$

$$b3 = -(Lf2 \cdot kf + Lr2 \cdot kr)/I,$$

and

$$b4 = -(Lf2 \cdot cf + Lr2 \cdot cr)/I.$$

Also, u(t) is u(t)=T and is an input of the system represented by the above-described state equation (2a). Therefore, from the above-described equation (1b), a component p1 of a matrix B is

$$p1 = h/(I \cdot r).$$

In the above-described state equation (2a), when it is set that

$$u(t) = -K \cdot X(t) \quad \dots \quad (2b),$$

the state equation (2a) is

$$dX(t)/dt = (A - BK) \cdot X(t) \quad \dots \quad (2c).$$

Therefore, when solving a differential equation (2c) of the state variable vector X(t) by setting an initial value X0 (t) of X (t) to XO(t)=(0,0,0,0) (suppose that there is no vibration before the torque input), when the gain K to converge X(t), that is to say, magnitude of the displacements in the bounce direction and in the pitch direction and a time rate of change thereof to 0 is determined, a torque value u(t) to suppress the bounce/pitch vibration is determined.

The gain K can be determined by using the so-called the optimal regulator theory. According to this theory, it is known that X(t) is stably converged in the state equation (2a) when a value of an evaluation function in a quadratic form (integral range is 0 to ∞)

$$J=\int(X^TQX+u^TRu)\,dt \quad \dots \quad (3a)$$

is the minimum, and a matrix K to minimize the evaluation function J is given by

$$K=R^{-1}\cdot B^T\cdot P.$$

Herein, P represents a solution of a Ricatti equation $-dP/dt=A^TP+PA+Q-PBR^{-1}B^TP$.
The Ricatti equation can be solved by an optional method known in a field of the linear system, and according to this, the gain K is determined.

Meanwhile, Q and R in the evaluation function J and the Ricatti equation are an optionally set half positive definite symmetrical matrix and a positive definite symmetrical matrix, respectively, and weighting matrices of the evaluation function J determined by a designer of the system. For example, in the motion model herein, Q and R are set as

[Equation 3]

$$Q=\begin{pmatrix}1&0&0&0\\0&10^3&0&0\\0&0&1&0\\0&0&0&10^2\end{pmatrix},\ R=(1)$$

and when setting norm (magnitude) of a specific component out of the components of the state vector, for example, dz/dt and dθ/dt so as to be larger than the norm of another component such as z and θ in the equation (3a), the component of which norm is set to be larger is relatively more stably converged. Also, when a value of the component of Q is set to be large, transient property is critical, that is to say, the value of the state vector rapidly converges to a stable value, and when a value of R is set to be large, consumption energy is decreased.

In the actual sprung vibration-damping control in the vibration-damping controlling apparatus 1, as illustrated in the block diagram in FIG. 4, the state variable vector X(t) is calculated by solving the differential equation of the equation (2a) by using the torque input value in the motion model unit 3d. Subsequently, a value U(t) obtained by multiplying the gain K determined so as to converge the state variable vector X(t) to 0 or the minimum value as described above by the state vector X(t), which is an output of the motion model unit 3d, by the FF secondary regulator unit 3e and the FB secondary regulator unit 3g, herein, the FF system vibration-damping torque compensation amount U·FF and the FB system vibration-damping torque compensation amount U·FB, are converted to the unit of the requested torque of the drive device 20 and converted to the vibration-damping control command to the drive device 20 (the vibration-damping control compensation throttle opening degree, the vibration-damping control compensation ignition timing, the vibration-damping control compensation fuel injection amount or the vibration-damping control compensation current amount), and subtracted from the control command (the target throttle opening degree, the target ignition timing, the target fuel injection amount or the target current amount) corresponding to the driver requested torque by the adder 2c. A system represented by the equations (1a) and (1b) is a resonance system, and the value of the state variable vector is substantially only the component of a frequency inherent to the system for the optional input. Therefore, by configuring such that (a converted value of) U(t) is subtracted from the control command corresponding to the driver requested torque, out of the driver requested torque, the component of the frequency inherent to the system, that is to say, the component, which allows the pitch/bounce vibration to occur in the vehicle body of the vehicle 10, is corrected, thereby suppressing the pitch/bounce vibration in the vehicle body of the vehicle 10. When the component of the frequency inherent to the system disappears in the requested torque given by the driver, the component of the frequency inherent to the system out of the driver requested torque command input to the drive device 20 is only -U(t), and the vibration by Tw (disturbance) is converged.

Meanwhile, as the mechanical motion model in the bounce direction and in the pitch direction of the vehicle body of the vehicle 10, for example, as illustrated in FIG. 6, a model taking into account spring elasticity of tires of the front wheel and the rear wheel (sprung and unsprung vibration model of the vehicle body of the vehicle 10) may be adopted in addition to the configuration in FIG. 5. If the tires of the front wheel and the rear wheel have the elastic coefficients ktf and ktr, respectively, as is understood from FIG. 6, the motion equation in the bounce direction and the motion equation in the pitch direction of the center of gravity of the vehicle body can be represented as equations in following equation 4.

[Equation 4]

$$M\frac{d^2z}{dt^2} = -kf\left(z + Lf\cdot\theta - xf\right) - cf\left(\frac{dz}{dt} + Lf\cdot\frac{d\theta}{dt} - \frac{dxf}{dt}\right)$$
$$-kf\left(z - Lf\cdot\theta - xr\right) - cr\left(\frac{dz}{dt} - Lr\cdot\frac{d\theta}{dt} - \frac{dxr}{dt}\right)$$

$$\ldots\ (4a)$$

$$I\frac{d^2\theta}{dt^2} = -Lf\left\{kf\left(z + Lf\cdot\theta - xf\right) + cf\left(\frac{dz}{dt} + Lf\cdot\frac{d\theta}{dt} - \frac{dxf}{dt}\right)\right\} +$$
$$Lr\left\{kr\left(z - Lr\cdot\theta - xr\right) + cr\left(\frac{dz}{dt} - Lr\cdot\frac{d\theta}{dt} - \frac{dxr}{dt}\right)\right\} + \frac{h}{r}\cdot T$$

$$\ldots\ (4b)$$

$$mf\frac{d^2xf}{dt^2} = kf\left(z + Lf\cdot\theta - xf\right) + cf\left(\frac{dz}{dt} + Lf\cdot\frac{d\theta}{dt} - \frac{dxf}{dt}\right) + ktf\cdot xf \qquad \ldots\ (4c)$$

$$mr\frac{d^2xr}{dt^2} = kr\left(z - Lr\cdot\theta - xr\right) + cr\left(\frac{dz}{dt} - Lr\cdot\frac{d\theta}{dt} - \frac{dxr}{dt}\right) + ktr\cdot xr \qquad \ldots\ (4d)$$

In the above-described equation 4, xf and xr represent unsprung displacement amounts of the front wheel and the rear wheel, respectively, and mf and mr represent unsprung masses of the front wheel and the rear wheel, respectively. Equations (4a) and (4b) compose the state equation as the equation (2a) as in the case of FIG. 5 by setting z, $\theta$, xf and xr and temporal differential values thereof to the state variable vector (the matrix A has eight rows and eight columns and a matrix B has eight rows and one column), and can determine a gain matrix K, which converges the magnitude of the state variable vector to 0 according to the optimal regulator theory. The actual vibration-damping control in the vibration-damping controlling apparatus 1 is similar to that in the case of FIG. 5.

Herein, in the feedback control system 3b in the vibration-damping controlling unit 3 in FIG. 4, although it is possible to configure such that the wheel torque input as the disturbance is actually detected by providing a torque sensor on each of the wheels 12FL, 12FR, 12RL and 12RR, for example, the wheel torque estimated value estimated by the wheel torque estimating unit 3f from another detectable value in the traveling vehicle 10 is herein used.

The wheel torque estimated value Tw can be estimated and calculated by a following equation (5) by using temporal differentiation of the wheel rotational speed $\omega$ or the wheel speed value r·$\omega$ obtained from the wheel speed sensor of the driving wheel, for example.

$$Tw = M\cdot r2\cdot d\omega/dt \ \ldots\ (5)$$

In the above-described equation (5), M represents the mass of the vehicle and r represents the wheel radius. That is to say, if the sum of the driving force generated at a site at which the driving wheel touches the road surface is equal to the driving force M·G (G represents acceleration) of an entire vehicle 10, the wheel torque Tw is given by a following equation (5a).

$$Tw= M \cdot G \cdot r \quad \dots \quad (5a)$$

The acceleration G of the vehicle is given by a following equation (5b) by a differential value of the wheel speed value r·ω.

$$G= r \cdot d\omega/dt \quad \dots \quad (5b)$$

Therefore, the wheel torque is estimated as the above-described equation (5).

In the vibration-damping controlling apparatus 1 of this embodiment, the vibration-damping controlling unit 3 for setting the vibration-damping control compensation amount changes the vibration-damping control compensation amount based on a state of the vehicle 10, thereby realizing appropriate vibration-damping control according to the state of the vehicle 10. Herein, the vibration-damping controlling unit 3 changes the vibration-damping control compensation torque (total vibration-damping control compensation amount) based on the state of the vehicle 10 by changing the FB system vibration-damping torque compensation amount U·FB, which is the vibration-damping control compensation amount set by the feedback control based on at least the wheel speed of the wheel, based on the state of the vehicle 10. Herein, the vibration-damping controlling unit 3 may change the vibration-damping control compensation torque (total vibration-damping control compensation amount) based on the state of the vehicle 10 also by changing the FF system vibration-damping torque compensation amount U·FF, which is the vibration-damping control compensation amount set by the feedforward control based on the driver requested torque (requested driving force) to the vehicle 10, based on the state of the vehicle 10. The vibration-damping controlling unit 3 may also directly change the vibration-damping control compensation torque (total vibration-damping control compensation amount) obtained by adding the FF system vibration-damping torque compensation amount U·FF, which is the vibration-damping control compensation amount by the feedforward control, and the FB system vibration-damping torque compensation amount U·FB, which is the vibration-damping control compensation amount by the feedback control, to each other, based on the state of the vehicle 10.

Herein, as described above, in the vibration-damping controlling unit 3, although the motion model unit 3d is used by the feedforward control system 3a and the feedback control system 3b, they are basically composed as independent and separate control systems, and the vibration-damping control compensation torque is set by adding the FF system vibration-damping torque compensation amount and the FB system vibration-damping torque compensation amount after calculating the FF system vibration-damping torque compensation amount and the FB system vibration-damping torque compensation amount. Therefore, the vibration-damping controlling unit 3 can change the FF system vibration-damping torque compensation amount of the feedforward control system 3a and the FB system vibration-damping torque compensation amount of the feedback control system 3b by performing upper and lower limit guard thereto separately or correcting them prior to the setting of the vibration-damping control compensation torque. Therefore, the vibration-damping controlling unit 3 can change the vibration-damping control compensation amount to the vibration-damping control compensation amount based on the state of the vehicle 10 with higher accuracy. Also, according to this, it becomes easy to block any one control according to an operational state of the vehicle 10.

Then, the vibration-damping controlling unit 3 of this embodiment includes an FF control changing unit 3k and a FF control gain setting unit 31 provided on the feedforward control system 3a and a FB control changing unit 3m and a FB control gain setting unit 3n provided on the feedback control system 3b. The vibration-damping controlling unit 3 changes (corrects) the FF system vibration-damping torque compensation amount by the FF control changing unit 3k and the FF control gain setting unit 31, and changes (corrects) the FB system vibration-damping torque compensation amount by the FB control changing unit 3m and the FB control gain setting unit 3n. That is to say, herein, the vibration-damping controlling unit 3 sets a FF control gain for the FF system vibration-damping torque compensation amount according to the state of the vehicle 10 and multiplies the FF control gain by the FF system vibration-damping torque compensation amount, thereby changing (correcting) the FF system vibration-damping torque compensation amount according to the state of the vehicle 10, and this sets a FB control gain for the FB system vibration-damping torque compensation amount according to the state of the vehicle 10 and multiplies the FB control gain by the FB system vibration-damping torque compensation amount, thereby changing (correcting) the FB system vibration-damping torque compensation amount according to the state of the vehicle 10.

The FF control changing unit 3k is arranged on a subsequent stage of the FF secondary regulator unit 3e and on a precedent stage of the adder 3h, to which the FF system vibration-damping torque compensation amount U·FF is input from the FF secondary regulator unit 3e, and outputs the FF system vibration-damping torque compensation amount U·FF changed (corrected) according to the state of the vehicle 10 to the adder 3h. The FF control changing unit 3k changes the FF system vibration-damping torque compensation amount U·FF based on the FF control gain K·FF by multiplying the FF control gain K·FF set by the FF control gain setting unit 31 by the FF system vibration-damping torque compensation amount U·FF. Then, the FF control gain setting unit 31 sets the FF control gain K·FF according to the state of the vehicle 10. That is to say, the FF system vibration-damping torque compensation amount U·FF input from the FF secondary regulator unit 3e to the FF control changing unit 3k is changed (corrected) according to the state of the vehicle 10 by the FF control changing unit 3k by the set of the FF control gain K·FF by the FF control gain setting unit 31 according to the state of the vehicle 10.

Meanwhile, the FF control changing unit 3k may perform the upper and lower limit guard such that the FF system vibration-damping torque compensation amount U·FF is within a range of upper and lower limit guard values set in advance. The FF control changing unit 3k may perform the upper and lower limit guard to the FF system vibration-damping torque compensation amount U·FF input from the FF secondary regulator unit 3e, for example, by setting values corresponding to an allowable engine torque variable value (allowable motor torque variable value when the power source for travel 22 is the motor) as an allowable driving force variable value of the power source for travel 22 set in advance as the upper and lower limit guard values (for example, a range from - tens of Nm to 0 Nm in a value converted to the unit of the requested torque of the drive device 20), thereby changing the FF system vibration-damping torque compensation amount U·FF. According to this, the FF control changing unit 3k can set an appropriate FF system vibration-damping torque compensation amount U·FF, which takes into account control other than the sprung vibration-damping control by the vibration-damping controlling apparatus 1, for example, that is to say, this can inhibit interference between the sprung vibration-damping control by the vibration-damping controlling apparatus 1 and another control. Also, the FF control changing unit 3k may perform the upper limit guard to the FF system vibration-damping torque compensation amount U·FF before being output to the adder 3h, for example, by setting a value corresponding to allowable acceleration and deceleration of the vehicle 10 set in advance as the upper limit guard value (for example, a range to be smaller than +0.00 G when being converted to acceleration and deceleration), thereby changing the FF system vibration-damping torque compensation amount U·FF. According to this, the FF control changing unit 3k can set the appropriate FF system vibration-damping torque compensation amount U·FF capable of preventing change in motion of the vehicle 10 from becoming large beyond expectation of the driver by the sprung vibration-damping control by the vibration-damping controlling apparatus 1 for improving the steering stability of the driver, the driving quality of the passenger and the like, for example, thereby preventing a feeling of discomfort of the driver.

The FB control changing unit 3m is arranged on a subsequent stage of the FB secondary regulator unit 3g and a precedent stage of the adder 3h, to which the FB system vibration-damping torque compensation amount U·FB is input from the FB secondary regulator unit 3g, and outputs the FB system vibration-damping torque compensation amount U·FB changed (corrected) according to the state of the vehicle 10 to the adder 3h. The FB control changing unit 3m changes the FB system vibration-damping torque compensation amount U·FB based on the FB control gain K·FB by multiplying the FB control gain K·FB set by the FB control gain setting unit 3n by the FB system vibration-damping torque compensation amount U·FB. Then, the FB control gain setting unit 3n sets the FB control gain K·FB according to the state of the vehicle 10. That is to say, the FB system vibration-damping torque compensation amount U·FB input from the FB secondary regulator unit 3g to the FB control changing unit 3m is changed (corrected) according to the state of the vehicle 10 by the FB control changing unit 3m by the set of the FB control gain K·FB by the FB control gain setting unit 3n according to the state of the vehicle 10.

Meanwhile, the FB control changing unit 3m may perform the upper and lower limit guard such that the FB system vibration-damping torque compensation amount U·FB is within the range of the upper and lower limit guard values set in advance. The FB control changing unit 3m may perform the upper and lower limit guard to the FB system vibration-damping torque compensation amount U·FB input from the FB secondary regulator unit 3g, for example, by setting the values corresponding to the allowable engine torque variable value (allowable motor torque variable value when the power source for travel 22 is the motor) as the allowable driving force variable value of the power source for travel 22 set in advance as the upper and lower limit guard values (for example, a range of ± tens of Nm in the value converted to the unit of the requested torque of the drive device 20), thereby changing the FB system vibration-damping torque compensation amount U·FB. According to this, the FB control changing unit 3m can set an appropriate FB system vibration-damping torque compensation amount U·FB, which takes into account control other than the sprung vibration-damping control by the vibration-damping controlling apparatus 1, for example, that is to say, this can inhibit the interference between the sprung vibration-damping control by the vibration-damping controlling apparatus 1 and another control. Also, the FB control changing unit 3m may perform the upper and lower limit guard to the FB system vibration-damping torque compensation amount U·FB before being output to the adder 3h, for example, by setting the values corresponding to the allowable acceleration and deceleration of the vehicle 10 set in advance as the upper and lower limit guard values (for example, a range within ± a/100 G when being converted to the acceleration and deceleration), thereby changing the FB system vibration-damping torque compensation amount U·FB. According to this, the FB control changing unit 3m can set the appropriate FB system vibration-damping torque compensation amount U·FB capable of preventing the change in the motion of the vehicle 10 from becoming large beyond the expectation of the driver by the sprung vibration-damping control by the vibration-damping controlling apparatus 1 for improving the steering stability of the driver, and the driving quality of the passenger and the like, for example, thereby preventing the feeling of discomfort of the driver.

Then, in the vibration-damping controlling unit 3 of this embodiment, the FF system vibration-damping torque compensation amount and the FB system vibration-damping torque compensation amount may be changed by the FF control changing unit 3k and the FB control changing unit 3m, respectively, based on the vehicle speed of the vehicle 10, the gear position when the transmission 26 loaded on the vehicle 10 has a plurality of gear positions, the engine rotational speed as the output rotational speed of the power source for travel 22 (the rotational speed of the output shaft of the motor when the power source for travel 22 is the motor), the driver requested torque and the like as parameters indicating the state of the vehicle 10. Also, in the vibration-damping controlling unit 3, the FB system vibration-damping torque compensation amount may be changed by the FB control chancing unit 3m based on a driving state of the transmission 26 loaded on the vehicle 10. Further, in the vibration-damping controlling unit 3, the FB system vibration-damping torque compensation amount may be changed by the FB control changing unit 3m based on an allowable fuel injection amount of the power source for travel 22 when the power source for travel 22 is the diesel engine. That is to say, the FF control gain setting unit 3l and the FB control gain setting unit 3n may set the FF control gain K·FF and the FB control gain K·FB based on them.

As illustrated in FIG. 7, the FF control gain setting unit 3l includes a FF control base gain setting unit 3o, a FF control vehicle speed gear position correcting unit 3p, an N-T correcting unit 3q and a FF control gain calculating unit 3w. The FB control gain setting unit 3n includes a FB control base gain setting unit 3r, a FB control vehicle speed gear position correcting unit 3s, the N-T correcting unit 3q also used by the FF control gain setting unit 3l, a driving force zero cross correcting unit 3t, a torque guard correcting unit 3u and a FB control gain calculating unit 3x. The FB control gain setting unit 3n further includes an injection amount guard correcting unit 3v when the power source for travel 22 is the diesel engine. Meanwhile, although it is described that the N-T correcting unit 3q is used by the FF control gain setting unit 3l and the FB control gain setting unit 3n, this is not a limitation, and this may be separately provided.

The FB control gain setting unit 3n is first described.

The FB control base gain setting unit 3r sets a FB control base gain. The FB control base gain is a value adjusted in advance for each vehicle 10 on which the vibration-damping controlling apparatus 1 is loaded, and is a reference value of the FB control gain K·FB. The FB control base gain setting unit 3r obtains the FB control base gain from a storage unit not illustrated in which the FB control base gain is stored and sets the same, for example. The FB control gain setting unit 3n sets a final FB control gain K·FB by multiplying various correction values by the FB control base gain.

The FB control vehicle speed gear position correcting unit 3s calculates a FB control vehicle speed gear position correction value based on the vehicle speed of the vehicle 10 and the gear position of the transmission 26, and the FB control vehicle speed gear position correction value is applied when increasing and decreasing the FB control gain K·FB according to the vehicle speed of the vehicle 10 or the gear position of the transmission 26 to increase and decrease the FB system vibration-damping torque compensation amount. Meanwhile, the vehicle speed of the vehicle 10 can be calculated based on the wheel speed Vwi. When appropriately setting the driving quality and the steering stability according to the vehicle speed, for example, the FB control vehicle speed gear position correcting unit 3s applies the FB control vehicle speed gear position correction value corresponding to the vehicle speed for increasing and decreasing the FB control gain K·FB, thereby increasing and decreasing the FB control gain K·FB according to the vehicle speed to increase and decrease the FB system vibration-damping torque compensation amount.

Herein, when the FB control vehicle speed gear position correction value for increasing the FB control gain K·FB (that is to say, a value larger than 1.0) is applied, for example, the FB system vibration-damping torque compensation amount is increased on a side to further suppress the sprung vibration of the vehicle 10 by the vibration-damping control of the vibration-damping controlling apparatus 1. Also, when the FB control vehicle speed gear position correction value for decreasing the FB control gain K·FB (that is to say, a value smaller than 1.0) is applied, for example, the FB system vibration-damping torque compensation amount is decreased on a side to reduce suppression of the sprung vibration of the vehicle 10 by the vibration-damping control of the vibration-damping controlling apparatus 1. As a result, it becomes possible to appropriately set the driving quality and the steering stability according to the vehicle speed by using the actions. The FB control vehicle speed gear position correcting unit 3s applies a relatively small FB control vehicle speed gear position correction value on a low vehicle speed side, and applies a relatively large FB control vehicle speed gear position correction value on a high vehicle speed side, thereby improving the driving quality by decreasing the FB control gain K·FB on the low vehicle speed side to decrease the FB system vibration-damping torque compensation amount and improving the steering stability by increasing the FB control gain K·FB on the high vehicle speed side to increase the FB system vibration-damping torque compensation amount, for example. Meanwhile, depending on the set value of the FB control base gain, which is the reference of the FB control gain K·FB, and specification of the vehicle 10, the relationship may be inversed.

Also, the FB control vehicle speed gear position correcting unit 3s applies the FB control vehicle speed gear position correction value (that is to say, the value smaller than 1.0) corresponding to the gear position for decreasing the FB control gain K·FB in a case in which so-called surge tends to easily occur in a specific gear position, for example, thereby decreasing the FB control gain K·FB according to the specific gear position to decrease the FB system vibration-damping torque compensation amount. According to this, the surge in the specific gear position can be suppressed.

The FB control vehicle speed gear position correcting unit 3s calculates the FB control vehicle speed gear position correction value based on a FB control vehicle speed gear position correction value map, for example. In the FB control vehicle speed gear position correction value map, relationship among the FB control vehicle speed gear position correction value, the vehicle speed and the gear position is described. The FB control vehicle speed gear position correction value map is created based on experiment and the like in advance to be stored in advance in a storage unit of the vibration-damping controlling apparatus 1. The FB control vehicle speed gear position correcting unit 3s calculates the FB control vehicle speed gear position correction value from the vehicle speed and the gear position based on the FB control vehicle speed gear position correction value map.

Meanwhile, although the FB control vehicle speed gear position correcting unit 3s obtains the FB control vehicle speed gear position correction value by using the FB control vehicle speed gear position correction value map in this embodiment, this embodiment is not limited to this. The FB control vehicle speed gear position correcting unit 3s may obtain the FB control vehicle speed gear position correction value based on an equation corresponding to the FB control vehicle speed gear position correction value, for example. Meanwhile, for example, when the driving quality and the steering stability according to the vehicle speed are changed and when a surge tendency in the gear position is varied in association with various changes in specification, the FB control gain K·FB and, by extension, the FB system vibration-damping torque compensation amount and the vibration-damping control compensation torque can be made appropriate easily by appropriately changing the above-described FB control vehicle speed gear position correction value map or the equation corresponding to this. This is similarly applied to various maps to be described hereinafter.

The N-T correcting unit 3q calculates the N-T correction value based on the engine rotational speed according to the state of the power source for travel 22 (rotational speed of the output shaft of the motor when the power source for travel 22 is the motor) and the driver requested torque, and the N-T correction value is applied when increasing and decreasing the FB control gain K·B according to the engine rotational speed or the driver requested torque to increase and decrease the FB system vibration-damping torque compensation amount. The N-T correcting unit 3q is applied when feasibility of the torque by the power source for travel 22 differs according to an operating range of the power source for travel 22 defined according to the engine rotational speed and the driver requested torque, for example. That is to say, the N-T correcting unit 3q applies an N-T correction value (that is to say, a value smaller than 1.0, for example, 0) corresponding to the engine rotational speed and the driver requested torque for decreasing the FB control gain K·FB when the so-called surge tends to easily occur in a specific operating range (operating range in which the torque is not stabilized) determined based on the engine rotational speed and the driver requested torque, for example, thereby decreasing the FB control gain K·FB according to the engine rotational speed and the driver requested torque to decrease the FB system vibration-damping torque compensation amount.

The N-T correcting unit 3q calculates the N-T correction value based on an N-T correction value map, for example. In the N-T correction value map, relationship among the N-T correction value, the engine rotational speed (rotational speed of the output shaft of the motor when the power source for travel 22 is the motor) and the driver requested torque is described. The N-T correction value map is created based on the experiment and the like in advance and is stored in the storage unit of the vibration-damping controlling apparatus 1 in advance. The N-T correcting unit 3q calculates the N-T correction value from the engine rotational speed and the driver requested torque based on the N-T correction value map.

The driving force zero cross correcting unit 3t calculates a driving force zero cross correction value based on the driving state of the transmission 26 loaded on the vehicle 10, and the driving force zero cross correction value is applied when increasing and decreasing the FB control gain K·FB according to the driving state of the transmission 26 to increase and decrease the FB system vibration-damping torque compensation amount. The driving force zero cross correcting unit 3t applies the driving force zero cross correction value in a driving force zero cross region in response to backlash of the gear, which might occur at the time of zero cross of the driving force (driving torque) transmitted in a driving force transmission system of the vehicle 10 including the transmission 26, for example, that is to say, when the torque from the power source for travel 22 side (driving side) and the torque from the wheel side (driven side) are balanced with each other in the driving force transmission system of the vehicle 10 including the transmission 26 and a driving state and a driven state are replaced with each other. The driving force zero cross correcting unit 3t applies the driving force zero cross correction value (that is to say, a value smaller than 1.0, for example, 0) corresponding to the driving state of the transmission 26 for decreasing the FB control gain K·FB at the time of the zero cross of the driving force (driving torque) transmitted in the driving force transmission system of the vehicle 10 including the transmission 26, for example, thereby decreasing the FB control gain K·FB according to the driving state of the transmission 26 to decrease the FB system vibration-damping torque compensation amount, and prevents the so-called surge and the like, for example.

The driving force zero cross correcting unit 3t calculates the driving force zero cross correction value based on a driving force zero cross correction value map, for example. In the driving force zero cross correction value map, relationship between the driving force zero cross correction value and the driving torque transmitted in the driving force transmission system of the vehicle 10 including the transmission 26 is described. The driving force zero cross correction value map is created based on the experiment and the like in advance and is stored in the storage unit of the vibration-damping controlling apparatus 1 in advance. The driving force zero cross correcting unit 3t calculates the driving force zero cross correction value from the driving torque transmitted in the driving force transmission system of the vehicle 10 including the transmission 26 based on the driving force zero cross correction value map.

The torque guard correcting unit 3u calculates a torque guard correction value based on the value corresponding to the allowable engine torque variable value (allowable motor torque variable value when the power source for travel 22 is the motor) as the allowable driving force variable value of the power source for travel 22, and the torque guard correction value is applied when increasing and decreasing the FB control gain K·FB based on the value corresponding to the allowable engine torque variable value to increase and decrease the FB system vibration-damping torque compensation amount. The torque guard correcting unit 3u performs the upper and lower limit guard to the FB system vibration-damping torque compensation amount by setting the values corresponding to the allowable engine torque variable value as the upper and lower limit guard values as described above, for example, and applies a predetermined torque guard correction value with which the FB control gain K·FB is gradually suppressed when the FB system vibration-damping torque compensation amount U·FB is changed. According to this, it becomes possible to prevent the FB system vibration-damping torque compensation amount from being extremely suppressed in the vicinity of the value corresponding to the allowable engine torque variable value, for example, to change to more appropriate FB system vibration-damping torque compensation amount as compared to a case in which the upper and lower limit guard is simply performed to the FB system vibration-damping torque compensation amount.

The injection amount guard correcting unit 3v calculates an injection amount guard correction value based on a value corresponding to the allowable fuel injection amount of the power source for travel 22 when the power source for travel 22 is the diesel engine, and the injection amount guard correction value is applied when increasing and decreasing the FB control gain K·FB based on the value corresponding to the allowable fuel injection amount to increase and decrease the FB system vibration-damping torque compensation amount. When the power source for travel 22 is the diesel engine, there is a case in which the upper and lower limit guard may be performed to the fuel injection amount of the power source for travel 22 by setting the values corresponding to the allowable fuel injection amount as the upper and lower limit guard values so as to prevent occurrence of accidental fire (which occurs when the fuel injection amount is smaller than a predetermined amount relative to an inhaled air amount, for example) and smoke (which occurs when the fuel injection amount is larger than the predetermined amount relative to the inhaled air amount, for example). Therefore, there is a case in which the vibration-damping control compensation fuel injection amount allowable in the vibration-damping control of the vibration-damping controlling apparatus 1 may be also determined based on this in order to inhibit the occurrence of the accidental fire and the smoke. Herein, when the upper and lower limit guard is performed to the vibration-damping control compensation fuel injection amount by the vibration-damping control command determining unit 3j as the limiting means by setting the values corresponding to the allowable fuel injection amount as the upper and lower limit guard values, for example, thereby changing (correcting) the vibration-damping control compensation fuel injection amount, in other words, in the operating range in which the accidental fire and the smoke of the power source for travel 22, which is the diesel engine, based on the allowable fuel injection amount easily occur, the injection amount guard correcting unit 3v applies a predetermined injection amount guard correction value with which the FB control gain K·FB is gradually suppressed as described above. The injection amount guard correcting unit 3v calculates the injection amount guard correction value based on the injection amount guard correction value map, for example. In the injection amount guard correction value map, relationship among the injection amount guard correction value, the engine rotational speed and the driver requested torque is described based on the allowable fuel injection amount, for example. The injection amount guard correction value map is created based on the experiment and the like in advance and is stored in the storage unit of the vibration-damping controlling apparatus 1 in advance. The injection amount guard correcting unit 3v calculates the injection amount guard correction value from the engine rotational speed and the driver requested torque based on the injection amount guard correction value map. According to this, for example, it is possible to prevent the FB system vibration-damping torque compensation amount from being extremely suppressed also in a case in which the upper and lower limit guard is performed to the vibration-damping control compensation fuel injection amount according to the value corresponding to the allowable fuel injection amount to change to more appropriate FB system vibration-damping torque compensation amount.

Then, in the FB control gain setting unit 3n, the FB control gain calculating unit 3x can set the FB control gain K·FB corresponding to the state of the vehicle 10 by multiplying the FB control base gain, the FB control vehicle speed gear position correction value, the N-T correction value, the driving force zero cross correction value, the torque guard correction value and further the injection amount guard correction value when the power source for travel 22 is the diesel engine by each other.

As a result, the FB control changing unit 3m can change (correct) the FB system vibration-damping torque compensation amount U·FB according to the state of the vehicle 10 based on the FB control gain K·FB.

Next, the FF control gain setting unit 31 is described, and herein, the description of the configuration substantially similar to that of the FB control gain setting unit 3n is omitted as far as possible.

The FF control base gain setting unit 3o, which is substantially similar to the FB control base gain setting unit 3r, sets the FF control base gain. The FF control vehicle speed gear position correcting unit 3p, which is substantially similar to the FB control vehicle speed gear position correcting unit 3s, calculates the FF control vehicle speed gear position correction value.

Then, in the FF control gain setting unit 31, the FF control gain calculating unit 3w can set the FF control gain K·FF corresponding to the state of the vehicle 10 by multiplying the FF control base gain, the FF control vehicle speed gear position correction value and the N-T correction value by each other. As a result, the FF control changing unit 3k can change (correct) the FF system vibration-damping torque compensation amount U·FF according to the state of the vehicle 10 based on the FF control gain K·FF.

The vibration-damping controlling unit 3 configured as described above can set the FF system vibration-damping torque compensation amount and the FB system vibration-damping torque compensation amount corresponding to the state of the vehicle 10 by changing the FF system vibration-damping torque compensation amount by the FF control changing unit 3k and the FF control gain setting unit 31 and changing the FB system vibration-damping torque compensation amount by the FB control changing unit 3m and the FB control gain setting unit 3n as described above. Then, the vibration-damping controlling unit 3 can calculate the vibration control compensation wheel torque corresponding to the state of the vehicle 10 and, by extension, the vibration-damping control compensation torque by adding the FF system vibration-damping torque compensation amount and the FB system vibration-damping torque compensation amount corresponding to the state of the vehicle 10.

Herein, as described above, when increasing the FB control gain K·FB and the FF control gain K·FF to increase the FB system vibration-damping torque compensation amount U·FB and the FF system vibration-damping torque compensation amount U·FF and, by extension, the vibration-damping control compensation torque, for example, the sprung vibration of the vehicle 10 is further suppressed by the vibration-damping control of the vibration-damping controlling apparatus 1, and there is a tendency that a flat feeling above the spring of the vehicle 10 increases and the steering stability increases, for example. On the other hand, when decreasing the FB control gain K·FB and the FF control gain K·FF to decrease the FB system vibration-damping torque compensation amount U·FB and the FF system vibration-damping torque compensation amount U·FF and, by extension, the vibration-damping control compensation torque, for example, the suppression of the sprung vibration of the vehicle 10 by the vibration-damping control of the vibration-damping controlling apparatus 1 is reduced and there is a tendency that the driving quality is improved, for example. As a result, it becomes possible to appropriately set the driving quality and the steering stability according to the state of the vehicle 10 by utilizing the effects. That is to say, by changing the FB system vibration-damping torque compensation amount U·FB and the FF system vibration-damping torque compensation amount U·FF according to the state of the vehicle 10 as described above and, by extension, by changing the vibration-damping control compensation torque, it is possible to achieve a good balance between the driving quality and the steering stability, which tend to be opposed to each other, according to the state of the vehicle 10.

The state of the vehicle 10 in the present invention also includes a state of the road surface on which the vehicle 10 is traveling, for example. That is to say, the state of the vehicle 10 includes any types of the road surfaces on which the vehicle 10 is traveling, for example. Then, in a state in which the vehicle 10 travels on the road surface with small unevenness, for example, the vibration controlling unit 3 can improve the flat feeling above the spring of the vehicle 10, for example, and improve the steering stability by relatively increasing the FB control gain K·FB and the FF control gain K·FF to relatively increase the FB system vibration-damping torque compensation amount U·FB and the FF system vibration-damping torque compensation amount U·FF and, by extension, the vibration-damping control compensation torque and allowing the sprung vibration of the vehicle 10 to be relatively further suppressed by the vibration-damping control of the vibration-damping controlling apparatus 1. At that time, since the sprung vibration is relatively further suppressed and the flat feeling above the spring of the vehicle 10 increases, there is a tendency that small vibration is easily picked up according to the unevenness of the road surface and the driving quality might be deteriorated, for example, however, such deterioration in the driving quality is inhibited in a state in which the vehicle 10 travels on the road surface with small unevenness as described above. On the other hand, in a state in which the vehicle 10 travels on the road surface with large unevenness, for example, the vibration-damping controlling unit 3 can improve the driving quality, for example, by relatively decreasing the FB control gain K·FB and the FF control gain K·FF to relatively decrease the FB system vibration-damping torque compensation amount U·FB and the FF system vibration-damping torque compensation amount U·FF and, by extension, the vibration-damping control compensation torque, thereby relatively reducing the suppression of the sprung vibration of the vehicle 10 by the vibration-damping control of the vibration-damping controlling apparatus 1. At that time, although the improvement in the flat feeling above the spring of the vehicle 10 and the improvement in the steering stability are inhibited a little, for example, due to the relatively reduced suppression of the sprung vibration of the vehicle 10 by the vibration-damping control of the vibration-tamping controlling apparatus 1, the driving quality can be improved even in a state in which the vehicle 10 travels on the road surface with large unevenness as described above.

Specifically, the vibration-damping controlling apparatus 1 may be provided with means for obtaining information related to the state of the road surface on which the vehicle 10 is traveling as the state (herein, traveling state) of the vehicle 10, for example, such as various known navigation devices 15.

The vibration-damping controlling apparatus 1 may also have the configuration such that the vibration controlling unit 3 obtains the unevenness of the road surface on which the vehicle 10 (that is to say, its own vehicle) is traveling or the information related to the same from the navigation device 15 and changes the FB system vibration-damping torque compensation amount (vibration-damping control compensation amount in the feedback control) and the vibration-damping control compensation torque (total vibration-damping control compensation amount) based on the unevenness of the road surface on which the vehicle 10 is traveling or the information related to the same, for example. For example, it is preferable that the vibration-damping controlling apparatus 1 obtains current positional information of the vehicle 10 by a GPS and the like and obtains information related to magnitude of the unevenness of the road surface associated with the position and information related to the type of the road from a map database, and the vibration controlling unit 3 preferably changes the FB system vibration-damping torque compensation amount (vibration-damping control compensation amount in the feedback control) and the vibration-damping control compensation torque (total vibration damping control compensation amount) according to the magnitude of the unevenness of the road surface and the type of the road. In this case, for example, it is preferable that the vibration-damping control compensation amount is made relatively small as the unevenness of the road surface is relatively large (road surface on which the deterioration in the driving quality tends to be found) as described above. Also, for example, it is preferable that the vibration-damping control compensation amount is made relatively large as the unevenness of the road surface is relatively small (road surface on which the deterioration in the driving quality does not tend to be found) as described above. Meanwhile, although the vibration controlling unit 3 may obtain the information itself related to the magnitude of the unevenness of the road surface from the map database, it is also possible to estimate the magnitude of unevenness of the road surface indirectly from the information related to the type of the road and change the FB system vibration-damping torque compensation amount (vibration-damping control compensation amount in the feedback control) and the vibration-damping control compensation torque (total vibration-damping control compensation amount) based on the same, for example. In general, there is a tendency that the unevenness of the road surface is relatively small in a main road such as a highway as compared to a non-main road such as a general road and a local road, so that the vibration controlling unit 3 may change the vibration-damping control compensation amount (or the control gain) to be relatively large in a state in which the vehicle 10 travels on the highway as compared to a state in which this travels on the general road and the local road, for example. Also, by obtaining the road information such as the number of lanes and vehicle width (road width), the vibration controlling unit 3 may regard that the unevenness of the road surface is smaller as the number of lanes or the vehicle width (road width) of the road is larger, for example, and may change such that the vibration-damping control compensation amount (or the control gain) becomes relatively large.

Also, when the vibration-damping controlling apparatus 1 obtains the information related to the unevenness of the road surface on which the vehicle 10 is traveling from the navigation device 15, there is a case in which estimation of the current position of the vehicle 10 or association with the map database is not excellent due to abnormality and the like in a communication system, a sensor system and the like of the navigation device 15, for example. Herein, there is a tendency that an error of the navigation device 15 of this type easily occurs in the non-main road and a narrow road in general, so that the vibration-damping controlling apparatus 1 estimates that it is in a state in which the vehicle 10 travels on the road with the large unevenness of the road surface, and the vibration controlling unit 3 may change the vibration-damping control compensation amount (or the control gain) to be smaller in this case. In this case, the vibration-damping control may be executed without correction based on the road information, that is to say, without change in the vibration-damping control compensation amount (or the control gain).

Meanwhile, in the vibration-damping controlling unit 3, a vibration-damping control permission/prohibition judging unit not illustrated may judge a control permission condition and a control prohibition condition of the vibration-damping control by the vibration-damping controlling unit 3, for example. The vibration-damping control permission/prohibition judging unit sets a vibration-damping control execution in-progress flag on (that is to say, permits the execution of the vibration-damping control) when a predetermined control permission condition is satisfied, for example, and on the other hand, sets the vibration-damping control execution in-progress flag off (that is to say, prohibits the execution of the vibration-damping control) when a predetermined control prohibition condition is satisfied. As the control permission condition and the control prohibition condition, for example, any one or a plurality of various conditions such as a condition based on the vehicle speed, a condition based on the gear position, a condition based on brake operation, a condition based on accelerator operation including so-called cruise control, a condition based on a vibration-damping control On/Off switch and a so-called diagnostic scan tool, a condition based on a temperature of an electronic throttle, a condition based on lock up control and slip control of the torque converter 24, a condition based on abnormality detection of each unit, a condition based on a slipping state of the wheel, a condition based on an operational state of the ABS control, the VSC and the TRC, and a condition based on a control period of the electronic control unit (ECU) 50 may be used. Also, the vibration-damping control permission/prohibition judging unit not illustrated may make various abnormality judgment. The vibration-damping control permission/prohibition judging unit not illustrated may make the abnormality judgment based on a total gear ratio of the driving force transmission system of the vehicle 10 including the transmission 26 of the drive device 20 as a so-called gear ratio out-of-range judgment, for example. Also, based on the vibration-damping control compensation torque and data of the vibration-damping control execution in-progress flag stored in the RAM and mirror data of them, the vibration-damping control permission/prohibition judging unit not illustrated may compare the data, thereby making the abnormality judgment such as RAM fixation, for example, as a so-called mirror abnormality judgment, for example. When the vibration-damping control permission/prohibition judging unit not illustrated judges that there are various abnormalities, this sets the vibration-damping control compensation torque to 0 and sets the vibration-damping control execution in-progress flag off, and this may block both of the vibration-damping control by the feedforward control system 3a and the vibration-damping control by the feedback control system 3b to stop the vibration-damping control through the vibration-damping controlling unit 3 or block only one of them according to the state.

Herein, in the vibration-damping controlling apparatus 1 of this embodiment, the vibration-damping control command determining unit 3j as the limiting means limits the vibration-damping control compensation amount, herein the vibration-damping control compensation torque, which is the total vibration-damping control compensation amount, according to the state of the vehicle 10, typically, the state of the power source for travel 22 of the vehicle 10, thereby realizing the further appropriate vibration-damping control according to the state of the vehicle 10. The vibration-damping control command determining unit 3j typically limits the vibration-damping control compensation torque by the request on a side of the power source for travel 22 loaded on the vehicle 10. Meanwhile, in this case, it is also possible to limit the FB system vibration-damping torque compensation amount, which is the vibration-damping control compensation amount in the feedback control, for example.

First, when the above-described vibration-damping control execution in-progress flag is set off, for example, the vibration-damping control command determining unit 3j limits the vibration-damping control compensation torque to 0 and limits the compensation amount in the vibration-damping control command to 0. That is to say, this limits the vibration-damping control compensation throttle opening degree and the vibration-damping control compensation ignition timing to 0 when the power source for travel 22 is the gasoline engine, limits the vibration-damping control compensation fuel injection amount to 0 when the power source for travel 22 is the diesel engine, and limits the vibration-damping control compensation current amount to 0 when the power source for travel 22 is the motor. When the above-described vibration-damping control execution in-progress flag is set on, for example, the vibration-damping control command determining unit 3j converts the vibration-damping control compensation torque set by the vibration-damping controlling unit 3 to the vibration-damping control command of the drive device 20, that is to say, converts to the vibration-damping control compensation throttle opening degree and the vibration-damping control compensation ignition timing when the power source for travel 22 is the gasoline engine, converts to the vibration-damping control compensation fuel injection amount when the power source for travel 22 is the diesel engine, and converts to the vibration-damping control compensation current amount when the power source for travel 22 is the motor, and according to this, the control command corresponding to the driver requested torque is corrected such that the pitch/bounce vibration does not occur based on the vibration-damping control command corresponding to the vibration-damping control compensation torque, and the control command corresponding to the corrected requested torque is given to the drive device 20.

Also, the vibration-damping control command determining unit 3j may perform the upper and lower limit guard to the vibration-damping control compensation torque set by the vibration-damping controlling unit 3 by setting the allowable engine torque variable value (the allowable motor torque variable value when the power source for travel 22 is the motor) as the allowable driving force variable value of the power source for travel 22 set in advance as the upper and lower limit guard values (for example, values obtained by adding the FF system vibration-damping torque compensation amount U·FF and the FB system vibration-damping torque compensation amount U·FB described above to values corresponding to the allowable engine torque variable values thereof, respectively, for example, in a range from - tens of Nm to tens of Nm in a value converted to the unit of the requested torque of the drive device 20), thereby limiting the vibration-damping control compensation torque. According to this, the vibration-damping control command determining unit 3j may set the appropriate vibration-damping control compensation torque taking into account the control other than the sprung vibration-damping control by the vibration-damping controlling apparatus 1, for example, that is to say, the interference between the sprung vibration-damping control by the vibration-damping controlling apparatus 1 and another control can be surely inhibited.

Also, when the power source for travel 22 is the diesel engine, for example, the vibration-damping control command determining unit 3j may set the vibration-damping control execution in-progress flag off and limit the vibration-damping control compensation torque to 0 to limit the compensation amount in the vibration-damping control command to 0 when open request of a valve associated with the vibration-damping control by the vibration-damping controlling apparatus 1 for the throttle of the power source for travel 22 continues for a predetermined period set in advance. In general, in the throttle opening degree control associated with the sprung vibration-damping control by the vibration-damping controlling apparatus 1, the open request of the valve for the throttle hardly continues for the predetermined period set in advance or longer, so that in this case it is judged to be abnormal and the vibration-damping control execution in-progress flag is set off and the vibration-damping control compensation torque is limited to 0.

Also, the vibration-damping control command determining unit 3j may limit the vibration-damping control compensation torque based on the allowable fuel injection amount of the power source for travel 22 and, by extension, limit the vibration-damping control compensation fuel injection amount in order to inhibit the occurrence of the smoke and the like when the power source for travel 22 is the diesel engine. The vibration-damping control command determining unit 3j may perform the upper and lower limit guard to the vibration-damping control compensation fuel injection amount converted based on the vibration-damping control compensation torque set by the vibration-damping controlling unit 3 by setting the allowable fuel injection amount of the power source for travel 22 as the upper and lower limit guard values, for example, thereby limiting the vibration-damping control compensation fuel injection amount (in other words, the vibration-damping control compensation torque). According to this, the vibration-damping control command determining unit 3j can set the appropriate vibration-damping control compensation torque and the vibration-damping control compensation fuel injection amount taking into account the inhibition of the occurrence of the smoke and the like of the power source for travel 22, that is to say, this can prevent the occurrence of the smoke and the like of the power source for travel 22 due to the sprung vibration-damping control by the vibration-damping controlling apparatus 1, thereby achieving a good balance between the sprung vibration-damping control and inhibition of deterioration in emission performance. Meanwhile, when correction of the fuel injection amount and divided injection of the fuel are executed in the control other than the vibration-damping control by the vibration-damping controlling apparatus 1, for example, the vibration-damping control command determining unit 3j may correct or limit the vibration-damping control compensation fuel injection amount.

Herein, the vibration-damping control command determining unit 3j may set the allowable fuel injection amount based on a vibration-damping correction base air-fuel ratio maximum injection amount calculation map and a before-correction vibration-damping correction reference injection amount calculation map, for example. In the vibration-damping correction base air-fuel ratio maximum injection amount calculation map, relationship among the allowable fuel injection amount, the engine rotational speed of the power source for travel 22 and the inhaled air amount is described, for example. The vibration-damping control command determining unit 3j may calculate the allowable fuel injection amount from the engine rotational speed of the power source for travel 22 and the inhaled air amount based on the vibration-damping correction base air-fuel ratio maximum injection amount calculation map. Herein, the allowable fuel injection amount corresponds to the fuel injection amount allowable in the vibration-damping control of the vibration-damping controlling apparatus 1 in a range in which the occurrence of the smoke and the like can be inhibited in the operational state with the predetermined inhaled air amount and the engine rotational speed, for example. In the before-correction vibration-damping correction reference injection amount calculation map, relationship among the allowable fuel injection amount, the engine rotational speed of the power source for travel 22 and a final fuel injection amount is described, for example. The vibration-damping control command determining unit 3j may calculate the allowable fuel injection amount from the engine rotational speed of the power source for travel 22 and the final fuel injection amount (for example, a previous final fuel injection amount) based on the before-correction vibration-damping correction reference injection amount calculation map. Herein, the allowable fuel injection amount corresponds to the fuel injection amount allowable in the vibration-damping control of the vibration-damping controlling apparatus 1 in a range in which a predetermined operational state can be realized in the operational state with a predetermined final fuel injection amount and the engine rotational speed, for example.

Also, the vibration-damping control command determining unit 3j may set the vibration-damping control execution in-progress flag off and limit the vibration-damping control compensation torque to 0 to limit the compensation amount in the vibration-damping control command to 0, when the cooling water temperature of the power source for travel 22 is not higher than a predetermined temperature set in advance (for example, approximately 70°C), for example, that is to say, when the power source for travel 22 is cold, for example. According to this, it becomes possible to inhibit the interference between the vibration-damping control by the vibration-damping controlling apparatus 1 and another control such as warming control.

Also, the vibration-damping control command determining unit 3j may set the vibration-damping control execution in-progress flag off and limit the vibration-damping control compensation torque to 0 to limit the compensation amount in the vibration-damping control command to 0, when the inhaled air temperature of the power source for travel 22 is out of a predetermined range set in advance (for example, -40°C to 60°C) or when the atmospheric pressure is not smaller than a predetermined value (for example, 65 kPa), that is to say, when the operational state of the power source for travel 22 is out of a supposed operating range due to a climatic condition. According to this, it becomes possible to prevent inappropriate execution of the vibration-damping control by the vibration-damping controlling apparatus 1 when the operational state of the power source for travel 22 is out of the supposed operating range.

Also, the vibration-damping control command determining unit 3j may limit the vibration-damping control compensation torque based on a deviation between a set idle rotational speed of the power source for travel 22 in an idle operation state of the vehicle 10 and an actual engine rotational speed (actual output rotational speed), for example. In this case, the vibration-damping control command determining unit 3j may limit such that the vibration-damping control compensation torque gradually decreases (in other words, damps) as the deviation between the set idle rotational speed and the actual engine rotational speed becomes smaller and the vibration-damping control compensation torque becomes 0 when the deviation becomes 0 by calculating the damping coefficient based on a near-idle rotational number damping coefficient calculation map and multiplying the damping coefficient as a gain by the vibration-damping control compensation torque (or the vibration-damping control compensation throttle opening degree and the vibration-damping control compensation ignition timing when the power source for travel 22 is the gasoline engine, the vibration-damping control compensation fuel injection amount when the power source for travel 22 is the diesel engine, and the vibration-damping control compensation current amount when the power source for travel 22 is the motor). That is to say, the vibration-damping control command determining unit 3j may limit such that the vibration-damping control compensation throttle opening degree and the vibration-damping control compensation ignition timing gradually decrease when the power source for travel 22 is the gasoline engine, the vibration-damping control compensation fuel injection amount gradually decreases when the power source for travel 22 is the diesel engine, and the vibration-damping control compensation current amount gradually decreases when the power source or travel 22 is the motor, as the actual engine rotational speed approaches the set idle rotational speed and they become 0 when the actual engine rotational speed becomes the set idle rotational speed. According to this, it is possible to prevent the appropriate idle operation from being inhibited by the vibration-damping control of the vibration-damping controlling apparatus 1 in the idle operation state in the power source for travel 22 of the vehicle 10.

Herein, in the near-idle rotational speed damping coefficient calculation map, relationship between the damping coefficient and the deviation between the set idle rotational speed and the actual engine rotational speed is described, for example. The vibration-damping control command determining unit 3j may calculate the damping coefficient from the deviation between the set idle rotational speed and the actual engine rotational speed based on the near-idle rotational speed damping coefficient calculation map.

Also, when the power source for travel 22 is the diesel engine, the vibration-damping control command determining unit 3j may limit the vibration-damping control compensation torque based on the deviation between the set idle fuel injection amount and the actual fuel injection amount of the power source for travel 22 in the idle operation state of the vehicle 10, for example. In this case, the vibration-damping control command determining unit 3j may limit such that the vibration-damping control compensation torque gradually decreases (in other words, damps) as the deviation between the set idle fuel injection amount and the actual fuel injection amount becomes smaller and the vibration-damping control compensation torque also becomes 0 when the deviation becomes 0 by calculating the damping coefficient based on the near-idle injection amount damping coefficient calculation map and multiplying the damping coefficient as the gain by the vibration-damping control compensation torque (or the vibration-damping control compensation fuel injection amount), for example. That is to say, the vibration-damping control command determining unit 3j may limit such that the vibration-damping control compensation fuel injection amount gradually decreases as the actual fuel injection amount approaches the set idle fuel injection amount and becomes 0 when the actual fuel injection amount becomes the set idle fuel injection amount. According to this, it becomes possible to prevent the appropriate idle operation from being inhibited by the vibration-damping control of the vibration-damping controlling apparatus 1 in the idle operation state in the power source for travel 22 of the vehicle 10.

Herein, in the near-idle injection amount damping coefficient calculation map, relationship between the damping coefficient and the deviation between the set idle fuel injection amount and the actual fuel injection amount is described, for example. The vibration-damping control command determining unit 3j may calculate the damping coefficient from the deviation between the set idle fuel injection amount and the actual fuel injection amount based on the near-idle injection amount damping coefficient calculation map.

According to the vibration-damping controlling apparatus 1 of the vehicle 10 according to the embodiment of the present invention described above, the vibration-damping controlling apparatus 1 of the vehicle 10, which suppresses the vibration occurring in the vehicle 10 by the input from the road surface to the wheels 12FL, 12FR, 12RL and 12RR of the vehicle 10 by controlling the driving torque of the vehicle 10 is provided with the vibration-damping controlling unit 3 for setting the vibration-damping control compensation amount for suppressing the vibration based on the actual measured value at least related to the vibration and the drive controlling unit 2 for controlling the driving torque of the power source for travel 22 of the vehicle 10 according to the vibration-damping control compensation amount, and changes the vibration-damping control compensation amount based on the state of the vehicle 10. Therefore, the vibration-damping controlling apparatus 1 of the vehicle 10 changes the vibration-damping control compensation amount

based on the state of the vehicle 10, so that this can execute the appropriate vibration-damping control according to the state of the vehicle 10.

According to the vibration-damping controlling apparatus 1 of the vehicle 10 according to the embodiment of the present invention described above, the vibration-damping controlling apparatus 1 of the vehicle 10 for suppressing the vibration including the component in the pitch direction or in the bounce direction occurring in the vehicle 10 by the input from the road surface to the wheels 12FL, 12FR, 12RL and 12RR of the vehicle 10 by controlling the driving torque of the vehicle 10 is provided with the vibration-damping controlling unit 3 for setting the vibration-damping control compensation amount by the feedback control based on at least the wheel speed of the wheels 12FL, 12FR, 12RL and 12RR of the vehicle 10 and the drive controlling unit 2 for controlling the driving torque of the power source for travel 22 of the vehicle 10 so as to suppress the amplitude of the vibration based on the vibration-damping control compensation amount, and changes the vibration-damping control compensation amount based on the state of the vehicle 10. Therefore, since the vibration-damping controlling apparatus 1 of the vehicle 10 changes the vibration-damping control compensation amount based on the state of the vehicle 10, this can execute the appropriate vibration-damping control corresponding to the state of the vehicle 10.

Meanwhile, the vibration-damping controlling apparatus of the vehicle according to the embodiment of the present invention described above is not limited to the above-described embodiment and various changes can be made without departing from the scope of claims.

Although it is described that the vibration-damping controlling apparatus of the vehicle performs the sprung vibration-damping control by supposing the sprung motion model or the sprung motion model and the unsprung motion model as the motion model and using the optimal regulator theory, this is not a limitation, and the vibration-damping may be performed by adopting the motion model other than the above-described one and by a controlling method other than the optimal regulator.

Also, in the vibration-damping controlling apparatus of the vehicle described above, there is a case in which responsiveness of the sprung vibration-damping control can be improved by detecting the vibration input from the road surface to the wheel of the vehicle based on the wheel speed sensor of only the front wheel (front wheel in the direction of movement), for example, that is to say, by estimating and calculating the wheel torque based on the wheel speed by the wheel speed sensor of only the front wheel.

Also, in the vibration-damping controlling apparatus of the vehicle as described above, for example, correction (adjustment) of the driver requested torque or the control command corresponding to the driver requested torque by the above-described sprung vibration-damping control (for example, the target throttle opening degree and the target ignition timing when the power source for travel is the gasoline engine, the target fuel injection amount when the power source for travel is the diesel engine, and the target current amount when the power source for travel is the motor) may be performed prior to that, which tends to hardly appears in the behavior of the vehicle, such as the correction (adjustment) by so-called jerk vibration-damping and the like having high vibration-damping target frequency (for example, approximately 6 Hz) in the driving force transmission system of the vehicle 10 including the transmission 26 of the drive device 20 and the correction (adjustment) by correction between each cylinder of the engine, for example. That is to say, the correction (adjustment) may be performed in the order of lowest to highest of the vibration-damping target frequency. Also, for example, the correction (adjustment) of the driver requested torque or the control command corresponding to the driver requested torque by the above-described sprung vibration-damping control may be performed after that, which tends to easily appear in the behavior of the vehicle, such as the correction (adjustment) such as an averaging process and the like of the driver requested torque or the control command corresponding to the driver requested torque.

Meanwhile, there is also a case in which the driving force (driving torque) can be controlled and the sprung vibration-damping control can be executed by increasing and decreasing transmission loss of the driving force in the driving force transmission system of the vehicle 10 including the torque converter 24 and the transmission 26 of the drive device 20, for example, and there is also a case in which the driving force (driving torque) can be controlled and the sprung vibration-damping control can be executed by increasing the brake force by controlling the operation of the brake device.

INDUSTRIAL APPLICABILITY

As described above, the vibration-damping controlling apparatus of the vehicle according to the present invention can execute the appropriate vibration-damping control corresponding to the state of the vehicle, and is suitable to be applied to the vibration-damping controlling apparatus of various vehicles for suppressing the vibration of the vehicle body by controlling the driving force of the vehicle.

**Claims**

1. A vibration-damping controlling apparatus of a vehicle for suppressing vibration including a component in a pitch direction or in a bounce direction occurring in the vehicle by an input from a road surface to a wheel of the vehicle by controlling driving force of the vehicle, comprising:

   a setting means that sets a vibration-damping control compensation amount by feedback control based on a wheel speed of the wheel of the vehicle; and
   a driving force controlling means that controls driving force of a power source for travel of the vehicle so as to suppress amplitude of the vibration based on the vibration-damping control compensation amount, wherein

   the vibration-damping controlling apparatus changes the vibration-damping control compensation amount based on a state of the vehicle.

2. The vibration-damping controlling apparatus of the vehicle according to claim 1, wherein the vibration-damping controlling apparatus changes the vibration-damping control compensation amount based on a vehicle speed of the vehicle.

3. The vibration-damping controlling apparatus of the vehicle according to claim 1 or 2, wherein the vibration-damping controlling apparatus changes the vibration-damping control compensation amount based on a gear position of a transmission loaded on the vehicle.

4. The vibration-damping controlling apparatus of the vehicle according to any one of claims 1 to 3, wherein the vibration-damping controlling apparatus changes the vibration-damping control compensation amount based on an output rotational speed of the power source for travel.

5. The vibration-damping controlling apparatus of the vehicle according to any one of claims 1 to 4, wherein the vibration-damping controlling apparatus changes the vibration-damping control compensation amount based on requested driving force to the vehicle.

6. The vibration-damping controlling apparatus of the vehicle according to any one of claims 1 to 5, wherein the vibration-damping controlling apparatus changes the vibration-damping control compensation amount based on a driving state of a transmission loaded on the vehicle.

7. The vibration-damping controlling apparatus of the vehicle according to any one of claims 1 to 6, wherein the vibration-damping controlling apparatus changes the vibration-damping control compensation amount based on an allowable driving force variable value of the power source for travel.

8. The vibration-damping controlling apparatus of the vehicle according to any one of claims 1 to 7, wherein the power source for travel is a diesel engine, and the vibration-damping controlling apparatus changes the vibration-damping control compensation amount based on an allowable fuel injection amount of the power source for travel.

9. The vibration-damping controlling apparatus of the vehicle according to any one of claims 1 to 8, wherein the vibration-damping controlling apparatus changes the vibration-damping control compensation amount by setting a control gain according to a state of the vehicle for the vibration-damping control compensation amount and multiplying the control gain by the vibration-damping control compensation amount.

10. The vibration-damping controlling apparatus of the vehicle according to any one of claims 1 to 9, comprising:

    a limiting means that limits the vibration-damping control compensation amount according to a state of the power source for travel of the vehicle.

11. The vibration-damping controlling apparatus of the vehicle according to claim 10, wherein the vibration-damping controlling apparatus limits the vibration-damping control compensation amount based on an allowable driving force variable value of the power source for travel.

12. The vibration-damping controlling apparatus of the vehicle according to claim 10 or 11, wherein the vibration-damping controlling apparatus limits the vibration-damping control compensation amount when the power source for travel is cold.

13. The vibration-damping controlling apparatus of the vehicle according to any one of claims 10 to 12, wherein the vibration-damping controlling apparatus limits the vibration-damping control compensation amount based on a deviation between a set idle rotational speed and an actual output rotational speed of the power source for travel in an idle operation state of the vehicle.

14. The vibration-damping controlling apparatus of the vehicle according to any one of claims 10 to 13, wherein the power source for travel is a diesel engine, and
the vibration-damping controlling apparatus limits the vibration-damping control compensation amount based on an allowable fuel injection amount of the power source for travel.

15. The vibration-damping controlling apparatus of the vehicle according to any one of claims 10 to 14, wherein the power source for travel is a diesel engine, and the vibration-damping controlling apparatus limits the vibration-damping control compensation amount based on a deviation between a set idle fuel injection amount and an actual fuel injection amount of the power source for travel in an idle operation state of the vehicle.

16. A vibration-damping controlling apparatus of a vehicle for suppressing vibration occurring in the vehicle by an input from a road surface to a wheel of the vehicle by controlling driving force of the vehicle, comprising:

a setting means that sets a vibration-damping control compensation amount for suppressing the vibration based on an actual measured value related to the vibration; and
a driving force controlling means that controls driving force of a power source for travel of the vehicle according to the vibration-damping control compensation amount, wherein

the vibration-damping controlling apparatus changes the vibration-damping control compensation amount based on a state of the vehicle.

# FIG.1

# FIG.2

ACCELERATOR
PEDAL
— 14

$\theta a$

WHEEL SPEED
SENSOR
— 30FR, 30FL, 30RR, 30RL

VwFL, VwFR, VwRL, VwRR

DRIVE CONTROL
DEVICE
50a

$\omega$
$r \cdot \omega$

BRAKE CONTROL
DEVICE
50b

CONTROL
COMMAND

DRIVE DEVICE
20

# FIG.3

Z

Cg

10

$\theta$

# FIG.4

1(50)

**DRIVE CONTROLLING UNIT** (2)

C0 — DRIVE REQUEST OF DRIVER — $\theta a$

2a CALCULATE DRIVER REQUEST TORQUE

2b DETERMINE CONTROL COMMAND

2c +

C1 (10, 20) VEHICLE DRIVE DEVICE

**VIBRATION-DAMPING CONTROLLING UNIT** (3)

3j DETERMINE VIBRATION-DAMPING CONTROL COMMAND

3c CONVERT TO WHEEL TORQUE

Two

3i CONVERT TO DRIVING TORQUE

**FEEDFORWARD CONTROL SYSTEM** (3a)

3l FF CONTROL GAIN SETTING UNIT

**MOTION MODEL UNIT** (3d)

U(t) — B — + + — ∫ — X

dX/dt

A

3e K U·FF

3k K·FF

3h + +

3g K U·FB

3m K·FB

3b

3n FB CONTROL GAIN SETTING UNIT

3f WHEEL TORQUE ESTIMATING UNIT

Tw

ω

**FEEDBACK CONTROL SYSTEM**

# FIG.5

# FIG.6

# FIG.7

<u>3l</u>

┌─ 3o
FF CONTROL BASE GAIN

┌─ 3p
FF CONTROL VEHICLE
SPEED GEAR POSITION
CORRECTION VALUE

┌─ 3q
N-T CORRECTION VALUE

┌─ 3r
FB CONTROL BASE GAIN

┌─ 3s
FB CONTROL VEHICLE
SPEED GEAR POSITION
CORRECTION VALUE

┌─ 3t
DRIVING FORCE ZERO
CROSS CORRECTION
VALUE

┌─ 3u
TORQUE GUARD
CORRECTION VALUE

┌─ 3v
INJECTION AMOUNT GUARD
CORRECTION VALUE (IN
CASE OF DIESEL ENGINE)

┌─ 3w
X

FF CONTROL
GAIN K·FF

┌─ 3x
X

FB CONTROL
GAIN K·FB

<u>3n</u>

**INTERNATIONAL SEARCH REPORT**

| International application No. |
|---|
| PCT/JP2008/069966 |

A. CLASSIFICATION OF SUBJECT MATTER
*F02D29/02*(2006.01)i, *B60W10/06*(2006.01)i, *B60W10/08*(2006.01)i, *B60W20/00* (2006.01)i, *F02D41/04*(2006.01)i

According to International Patent Classification (IPC) or to both national classification and IPC

B. FIELDS SEARCHED

Minimum documentation searched (classification system followed by classification symbols)
F02D29/02, B60W10/06, B60W10/08, B60W20/00, F02D41/04

Documentation searched other than minimum documentation to the extent that such documents are included in the fields searched
Jitsuyo Shinan Koho          1922-1996   Jitsuyo Shinan Toroku Koho   1996-2008
Kokai Jitsuyo Shinan Koho    1971-2008   Toroku Jitsuyo Shinan Koho   1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2008-100605 A (Toyota Motor Corp.),<br>01 May, 2008 (01.05.08),<br>Full text; all drawings<br>(Family: none) | 1,2,9,10,16<br>3-8,11-15 |
| Y | JP 2001-47835 A (Nissan Motor Co., Ltd.),<br>20 February, 2001 (20.02.01),<br>Par. Nos. [0092] to [0094]; Figs. 15 to 17<br>(Family: none) | 1,2,9,10,16 |
| A | JP 2004-168148 A (Denso Corp.),<br>17 June, 2004 (17.06.04),<br>Full text; all drawings<br>& US 2005/0049761 A1 | 1-16 |

☐ Further documents are listed in the continuation of Box C.       ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 17 November, 2008 (17.11.08) | 02 December, 2008 (02.12.08) |

| Name and mailing address of the ISA/<br>Japanese Patent Office | Authorized officer |
|---|---|
| Facsimile No. | Telephone No. |

Form PCT/ISA/210 (second sheet) (April 2007)

**REFERENCES CITED IN THE DESCRIPTION**

**Patent documents cited in the description**

- JP 2008100605 A